(19) Europäisches Patentamt
European Patent Office
Office européen des brevets

(11) **EP 4 597 857 A1**

(12) **EUROPEAN PATENT APPLICATION**
published in accordance with Art. 153(4) EPC

(43) Date of publication:
06.08.2025  Bulletin 2025/32

(21) Application number: 23870483.7

(22) Date of filing: 19.09.2023

(51) International Patent Classification (IPC):
*H04B 7/0456* (2017.01)

(52) Cooperative Patent Classification (CPC):
H04B 7/0456; H04B 7/06

(86) International application number:
PCT/CN2023/119731

(87) International publication number:
WO 2024/067251 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022  CN 202211214376

(71) Applicant: Huawei Technologies Co., Ltd.
Shenzhen, Guangdong 518129 (CN)

(72) Inventors:
• YANG, Pei
Shenzhen, Guangdong 518129 (CN)
• LI, Tie
Shenzhen, Guangdong 518129 (CN)
• YU, Zheng
Shenzhen, Guangdong 518129 (CN)
• LIU, Jianghua
Shenzhen, Guangdong 518129 (CN)

(74) Representative: Roth, Sebastian
Mitscherlich PartmbB
Patent- und Rechtsanwälte
Karlstraße 7
80333 München (DE)

(54) **COMMUNICATION METHOD AND RELATED DEVICE**

(57)    This application discloses a communication method and a related device, and may be applied to a single-station transmission measurement scenario and/or a multi-station joint transmission measurement scenario. The method includes: A network device configures, for a terminal device, a channel measurement resource set and one codebook mode related to the channel measurement resource set. The channel measurement resource set includes a first group of channel measurement resources and a second group of channel measurement resources. **In** this case, the terminal device obtains and reports channel state information. The channel state information is related to first configuration information and second configuration information. The terminal device obtains, via the second configuration information, the codebook mode related to the channel measurement resource set, so that the codebook mode can be used for all channel measurement resources. In comparison with an existing technology in which there are a plurality of codebook modes, a quantity of precoding matrix indicators (precoding matrix indications, PMIs) corresponding to one codebook mode that are stored in the terminal device can be reduced, a delay of generating the PMIs can be reduced, and time complexity and space complexity can be reduced.

FIG. 3

**Description**

This application claims priority to Chinese Patent Application No. 202211214376.3, filed with the China National Intellectual Property Administration on September 30, 2022 and entitled "COMMUNICATION METHOD AND RELATED DEVICE", which is incorporated herein by reference in its entirety.

<u>**TECHNICAL FIELD**</u>

This application relates to the communication field, and in particular, to a communication method and a related device.

<u>**BACKGROUND**</u>

With explosive growth of a network communication capacity, an evolution requirement of a wireless communication technology oriented to a 5th generation mobile communication technology (5th Generation, 5G) is clearer and more urgent, and begins to draw great attention in the industry. In evolution of the 5G-oriented wireless communication technology, conventional wireless communication performance indicators, such as a network capacity and spectral efficiency, need to be continuously improved to further improve utilization of limited and increasingly scarce wireless spectrums. In addition, more diversified communication modes, and improvement of end user experience and expansion of cellular communication application that are brought by the more diversified communication modes are also an evolution direction that needs to be considered. It is clearly specified that, non-coherent joint transmission (Non-Coherent Joint Transmission, NCJT), as a key 5G-oriented candidate technology, needs to be supported in both long term evolution (Long Term Evolution, LTE) and 5G new radio (New Radio, NR).

A codebook is a matrix set. The codebook may help a base station select a proper precoding matrix to better serve a user. A user equipment obtains channel state information by measuring pilot information sent by the base station, and accurately feeds back the channel state information to the base station. This plays an important role in performance of a multiple-input multiple-output (multiple-input multiple-output, MIMO) system. Therefore, a codebook configuration affects overall performance of the system. A codebook mode (codebookMode) in the codebook configuration affects the channel state information reported by the user equipment. However, in R17, a configuration of codebookMode is incomplete.

Therefore, how to specifically configure codebookMode is an urgent problem to be resolved.

<u>**SUMMARY**</u>

This application provides a communication method and a related device, to reduce a quantity of precoding matrix indicators (precoding matrix indications, PMIs) corresponding to a codebook mode that are stored in a terminal device, reduce a delay of generating the PMIs, and reduce time complexity and space complexity.

A first aspect of embodiments of this application provides a communication method, which may be applied to a single-transmission-reception-point (transmission reception point, TRP) measurement scenario and/or an NCJT measurement scenario. The method may be performed by a communication device, or may be performed by a component (for example, a processor, a chip, or a chip system) of the communication device. The communication device is specifically a terminal device, and the method includes: obtaining first configuration information and second configuration information, where the first configuration information is used to configure a channel measurement resource set, the second configuration information is used to configure one codebook mode related to the channel measurement resource set, and the channel measurement resource set includes a first group of channel measurement resources and a second group of channel measurement resources; and sending channel state information (channel state information, CSI) to a network device, where the CSI is related to the first configuration information and the second configuration information.

In this embodiment of this application, the terminal device obtains, via the second configuration information, the codebook mode related to the channel measurement resource set, so that the codebook mode can be used for all channel measurement resources. Compared with an existing technology in which there are a plurality of codebook modes, a quantity of PMIs corresponding to the codebook mode that are stored in the terminal device can be reduced, a delay of generating the PMIs can be reduced, and time complexity and space complexity can be reduced.

A second aspect of embodiments of this application provides a communication method, which may be applied to a single-TRP measurement scenario and/or an NCJT measurement scenario. The method may be performed by a communication device, or may be performed by a component (for example, a processor, a chip, or a chip system) of the communication device. The communication device is specifically a network device, and the method includes: sending first configuration information and second configuration information to a terminal device, where the first configuration information is used to configure a channel measurement resource set, the second configuration information is used to configure one codebook mode related to the channel measurement resource set, and the channel measurement resource set includes a first group of channel measurement resources and a second group of channel measurement resources; and receiving channel state information CSI from the terminal device, where the CSI is related to the first configuration information and the second configuration information.

In this embodiment of this application, the network device configures, via the second configuration information, the codebook mode related to the channel measurement resource set for the terminal device, so that the codebook mode can be used for all channel measurement resources. Compared with an existing technology in which there are a plurality of codebook modes, a quantity of PMIs corresponding to the codebook mode that are stored in the terminal device can be reduced, a delay of generating the PMIs can be reduced, and time complexity and space complexity can be reduced.

Optionally, in a possible implementation of the first aspect or the second aspect, a part of channel measurement resources in the channel measurement resource set is the first group of channel measurement resources, and the other part of the channel measurement resources in the channel measurement resource set is the second group of channel measurement resources.

In this possible implementation, the channel measurement resource set is divided into two parts, so that channel resource measurement of different network devices can be respectively performed subsequently by using the two parts of measurement resources, to improve flexibility of channel measurement resource configuration.

Optionally, in a possible implementation of the first aspect or the second aspect, the CSI includes at least one of first sub-CSI, second sub-CSI, and third sub-CSI. The first sub-CSI is related to a fourth group of channel measurement resources and the codebook mode. The fourth group of channel measurement resources is the first group of channel measurement resources, or the fourth group of channel measurement resources is a channel measurement resource other than a first same channel measurement resource in the first group of channel measurement resources. The first same channel measurement resource is a same channel measurement resource in the first group of channel measurement resources and in a third group of channel measurement resources. The third group of channel measurement resources includes N resource pairs. Each of the N resource pairs includes at least one channel measurement resource in the first group of channel measurement resources and at least one channel measurement resource in the second group of channel measurement resources, and N is a positive integer. The second sub-CSI is related to a fifth group of channel measurement resources and the codebook mode. The fifth group of channel measurement resources is the second group of channel measurement resources, or the fifth group of channel measurement resources is a channel measurement resource other than a second same channel measurement resource in the second group of channel measurement resources. The second same channel measurement resource is a same channel measurement resource in the second group of channel measurement resources and in the third group of channel measurement resources. The third sub-CSI is related to the third group of channel measurement resources and the codebook mode. The third group of channel measurement resources includes N resource pairs. Each of the N resource pairs includes at least one channel measurement resource in the first group of channel measurement resources and at least one channel measurement resource in the second group of channel measurement resources.

This possible implementation may be applied to the single-TRP measurement scenario. The terminal device may obtain, by using the fourth group of channel measurement resources and the codebook mode, the first sub-CSI sent to a first network device; and may obtain, by using the fifth group of channel measurement resources and the codebook mode, the second sub-CSI sent to a second network device. In addition, this possible implementation may be further applied to the NCJT measurement scenario. The terminal device may obtain, by using the third group of channel measurement resources and the codebook mode, the third sub-CSI sent to the first network device and/or the second network device.

Optionally, in a possible implementation of the first aspect or the second aspect, the first configuration information and the second configuration information are carried in at least one of the following: radio resource control (Radio Resource Control, RRC) signaling, downlink control information (downlink control information, DCI), and a medium access control control element (Medium Access Control Control Element, MAC CE), and the like.

In this possible implementation, a plurality of cases in which the configuration information is carried in information/signaling are proposed, to improve configuration flexibility.

A third aspect of embodiments of this application provides a communication method, which may be applied to a single-TRP measurement scenario and/or an NCJT measurement scenario. The method may be performed by a communication device, or may be performed by a component (for example, a processor, a chip, or a chip system) of the communication device. The communication device is specifically a terminal device, and the method includes: obtaining first configuration information, second configuration information, and third configuration information, where the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources; and sending channel state information CSI to at least one network device, where the CSI is related to the first configuration information, the second configuration information, and the third configuration information.

In this embodiment of this application, the first codebook mode related to the first group of channel measurement resources and the second codebook mode related to the second group of channel measurement resources are configured. To be specific, each network device configures one codebook mode, and codebook modes of different network devices are not related to each other and have no constraint between each other. Therefore, flexibility of configuring the codebook mode can be improved.

A fourth aspect of embodiments of this application provides a communication method, which may be applied to a single-TRP measurement scenario and/or an NCJT measurement scenario. The method may be performed by a communication device, or may be performed by a component (for example, a processor, a chip, or a chip system) of the communication device. The communication device is specifically a network device, and the method includes: sending first configuration information, second configuration information, and third configuration information to a terminal device, where the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources; and receiving channel state information CSI from the terminal device, where the CSI is related to the first configuration information, the second configuration information, and the third configuration information.

In this embodiment of this application, the first codebook mode related to the first group of channel measurement resources and the second codebook mode related to the second group of channel measurement resources are configured. To be specific, each network device configures one codebook mode, and codebook modes of different network devices are not related to each other and have no constraint between each other. Therefore, flexibility of configuring the codebook mode can be improved.

Optionally, in a possible implementation of the third aspect or the fourth aspect, a part of channel measurement resources in a channel measurement resource set is the first group of channel measurement resources, and the other part of the channel measurement resources in the channel measurement resource set is the second group of channel measurement resources.

In this possible implementation, the channel measurement resource set is divided into two parts, so that channel resource measurement of different network devices can be respectively performed subsequently by using the two parts of measurement resources, to improve flexibility of channel measurement resource configuration.

Optionally, in a possible implementation of the third aspect or the fourth aspect, the CSI includes at least one of first sub-CSI and second sub-CSI. The first sub-CSI is related to the first group of channel measurement resources and the first codebook mode. The second sub-CSI is related to the second group of channel measurement resources and the second codebook mode.

This possible implementation may be applied to the single-TRP measurement scenario. The terminal device may obtain, by using the first group of channel measurement resources and the first codebook mode, the first sub-CSI sent to a first network device; and may obtain, by using the second group of channel measurement resources and the second codebook mode, the second sub-CSI sent to a second network device.

A fifth aspect of embodiments of this application provides a communication method, which may be applied to a single-TRP measurement scenario and/or an NCJT measurement scenario. The method may be performed by a communication device, or may be performed by a component (for example, a processor, a chip, or a chip system) of the communication device. The communication device is specifically a terminal device, and the method includes: obtaining first configuration information, second configuration information, third configuration information, and fourth configuration information, where the first configuration information is used to configure a first group of channel measurement resources and a second group of channel measurement resources; the second configuration information is used to configure a first codebook mode related to a fourth group of channel measurement resources, where the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources includes N resource pairs; and each of the N resource pairs includes at least one channel measurement resource in the first group of channel measurement resources and at least one channel measurement resource in the second group of channel measurement resources; the third configuration information is used to configure a second codebook mode related to a fifth group of channel measurement resources, where the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and the fourth configuration information is used to configure a third codebook mode related to the third group of channel measurement resources; and sending channel state information CSI to at least one network device, where the CSI is related to the first configuration information, the second configuration information, the third configuration information, and the fourth configuration information.

In this embodiment of this application, codebook modes configured for different network devices are not related. To be specific, one codebook mode is configured for each network device, and different codebook modes are not related to each other and have no constraint between each other. In addition, in the single-TRP measurement scenario and the NCJT measurement scenario, codebook modes needed for the single-TRP measurement and the NCJT measurement are separately configured by using three codebook modes codebookMode in codebookConfig, and the codebook mode for the NCJT measurement is decoupled from the codebook mode for the single-TRP measurement. Therefore, flexibility of configuring the codebook mode can be improved.

A sixth aspect of embodiments of this application provides a communication method, which may be applied to a single-TRP measurement scenario and/or an NCJT measurement scenario. The method may be performed by a communication device, or may be performed by a component (for example, a processor, a chip, or a chip system) of the communication device. The communication device is specifically a network device, and the method includes: sending first configuration information, second configuration information, third configuration information, and fourth configuration information to a terminal device, where the first configuration information is used to configure a first group of channel measurement resources and a second group of channel measurement resources; the second configuration information is used to configure a first codebook mode related to a fourth group of channel measurement resources, where the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources includes N resource pairs; and each of the N resource pairs includes at least one channel measurement resource in the first group of channel measurement resources and at least one channel measurement resource in the second group of channel measurement resources; the third configuration information is used to configure a second codebook mode related to a fifth group of channel measurement resources, where the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and the fourth configuration information is used to configure a third codebook mode related to the third group of channel measurement resources; and receiving channel state information CSI from the terminal device, where the CSI is related to the first configuration information, the second configuration information, the third configuration information, and the fourth configuration information.

In this embodiment of this application, codebook modes configured for different network devices are not related. To be specific, one codebook mode is configured for each network device, and different codebook modes are not related to each other and have no constraint between each other. In addition, in the single-TRP measurement scenario and the NCJT measurement scenario, codebook modes needed for the single-TRP measurement and the NCJT measurement are separately configured by using three codebook modes codebookMode in codebookConfig, and the codebook mode for the NCJT measurement is decoupled from the codebook mode for the single-TRP measurement. Therefore, flexibility of configuring the codebook mode can be improved.

Optionally, in a possible implementation of the fifth aspect or the sixth aspect, a part of channel measurement resources in a channel measurement resource set is the first group of channel measurement resources, and the other part of the channel measurement resources in the channel measurement resource set is the second group of channel measurement resources.

In this possible implementation, the channel measurement resource set is divided into two parts, so that channel resource measurement of different network devices can be respectively performed subsequently by using the two parts of measurement resources, to improve flexibility of channel measurement resource configuration.

Optionally, in a possible implementation of the fifth aspect or the sixth aspect, the CSI includes at least one of first sub-CSI, second sub-CSI, and third sub-CSI. The first sub-CSI is related to the fourth group of channel measurement resources and the first codebook mode. The second sub-CSI is related to the fifth group of channel measurement resources and the second codebook mode. The third sub-CSI is related to the third group of channel measurement resources and the third codebook mode.

This possible implementation may be applied to the single-TRP measurement scenario. The terminal device may obtain, by using the fourth group of channel measurement resources and the first codebook mode, the first sub-CSI sent to a first network device; and may obtain, by using the fifth group of channel measurement resources and the second codebook mode, the second sub-CSI sent to a second network device. In addition, this possible implementation may be further applied to the NCJT measurement scenario. The terminal device may obtain, by using the third group of channel measurement resources and the third codebook mode, the third sub-CSI sent to the first network device and/or the second network device.

A seventh aspect of embodiments of this application provides a communication method, which may be applied to a single-TRP measurement scenario and/or a CJT measurement scenario. The method may be performed by a communication device, or may be performed by a component (for example, a processor, a chip, or a chip system) of the communication device. The communication device is specifically a terminal device, and the method includes: obtaining indication information, first configuration information, and second configuration information, where the indication information indicates that a codebook used for channel measurement is a first codebook or a second codebook, the first configuration information is used to configure a parameter of the first codebook, and the second configuration information is used to configure a parameter of the second codebook; and sending channel state information CSI to the at least one network device, where the CSI is related to the indication information, the first configuration information, and the second configuration information.

In this embodiment of this application, the first codebook and the second codebook are configured in parallel, and the indication information indicates that the to-be-used codebook is the first codebook and the second codebook, to improve flexibility of codebook configuration.

An eighth aspect of embodiments of this application provides a communication method, which may be applied to a single-TRP measurement scenario and/or a CJT measurement scenario. The method may be performed by a communication device, or may be performed by a component (for example, a processor, a chip, or a chip system) of the communication device. The communication device is specifically a network device, and the method includes: sending indication information, first configuration information, and second configuration information to a terminal device, where the indication information indicates that a codebook used for channel measurement is a first codebook or a second codebook, the first configuration information is used to configure a parameter of the first codebook, and the second configuration information is used to configure a parameter of the second codebook; and receiving channel state information CSI from the terminal device, where the CSI is related to the indication information, the first configuration information, and the second configuration information.

In this embodiment of this application, the first codebook and the second codebook are configured in parallel, and the indication information indicates that the to-be-used codebook is the first codebook and the second codebook, to improve flexibility of codebook configuration.

Optionally, in a possible implementation of the seventh aspect or the eighth aspect, the parameter of the first codebook includes at least one of the following: a first codebook subset restriction and a codebook mode. The parameter of the second codebook includes a second codebook subset restriction.

In this possible implementation, the parameter of the first codebook includes the first codebook subset restriction and/or the codebook mode, and the parameter of the second codebook includes the second codebook subset restriction. Further, the CSI may be obtained via the first configuration information and configuration information.

Optionally, in a possible implementation of the seventh aspect or the eighth aspect, a quantity of the at least one network device is 1, the codebook mode is a preset codebook mode, the preset codebook mode is a mode 1 or a mode 2, and the parameter of the first codebook includes the first codebook subset restriction and does not include the codebook mode.

In this possible implementation, when the quantity of the at least one network device is 1, the preset codebook mode may be used, to reduce resources occupied for configuring the codebook mode.

A ninth aspect of embodiments of this application provides a communication method, which may be applied to a single-TRP measurement scenario and/or a CJT measurement scenario. The method may be performed by a communication device, or may be performed by a component (for example, a processor, a chip, or a chip system) of the communication device. The communication device is specifically a terminal device, and the method includes: obtaining indication information, where the indication information is used by a network device to configure a preset mode of a first codebook or a second codebook for channel measurement, and the preset codebook mode is a mode 1 or a mode 2; and sending channel state information CSI to the network device, where the CSI is related to the indication information.

In this embodiment of this application, when a quantity of at least one network device is 1, the indication information may indicate whether to use the preset mode of the first codebook or the second codebook. Compared with the solution in the seventh aspect, overheads of the indication information indicating the first codebook or the second codebook can be reduced.

A tenth aspect of embodiments of this application provides a communication method, which may be applied to a single-TRP measurement scenario and/or a CJT measurement scenario. The method may be performed by a communication device, or may be performed by a component (for example, a processor, a chip, or a chip system) of the communication device. The communication device is specifically a network device, and the method includes: sending indication information to a terminal device, where the indication information is used by a network device to configure a preset mode of a first codebook or a second codebook for channel measurement, and the preset codebook mode is a mode 1 or a mode 2; and receiving channel state information CSI from the terminal device, where the CSI is related to the indication information.

In this embodiment of this application, when a quantity of at least one network device is 1, the indication information may indicate whether to use the preset mode of the first codebook or the second codebook. Compared with the solution in the eighth aspect, overheads of the indication information indicating the first codebook or the second codebook can be reduced.

An eleventh aspect of embodiments of this application provides a communication device, which may be used in a single-TRP measurement scenario and/or an NCJT measurement scenario. The communication device is specifically a terminal device, and the communication device includes: an obtaining unit, configured to obtain first configuration information and second configuration information, where the first configuration information is used to configure a channel measurement resource set, the second configuration information is used to configure one codebook mode related to the channel measurement resource set, and the channel measurement resource set includes a first group of channel measurement resources and a second group of channel measurement resources; and a sending unit, configured to send channel state information CSI to a network device, where the CSI is related to the first configuration information and the second configuration information.

A twelfth aspect of embodiments of this application provides a communication device, which may be used in a single-TRP measurement scenario and/or an NCJT measurement scenario. The communication device is specifically a network device, and the communication device includes: a sending unit, configured to send first configuration information and second configuration information to a terminal device, where the first configuration information is used to configure a channel measurement resource set, the second configuration information is used to configure one codebook mode related to the channel measurement resource set, and the channel measurement resource set includes a first group of channel measurement resources and a second group of channel measurement resources; and a receiving unit, configured to receive channel state information CSI from the terminal device, where the CSI is related to the first configuration information and the second configuration information.

Optionally, in a possible implementation of the eleventh aspect or the twelfth aspect, a part of channel measurement resources in the channel measurement resource set is the first group of channel measurement resources, and the other part of the channel measurement resources in the channel measurement resource set is the second group of channel measurement resources.

Optionally, in a possible implementation of the eleventh aspect or the twelfth aspect, the CSI includes at least one of first sub-CSI, second sub-CSI, and third sub-CSI. The first sub-CSI is related to a fourth group of channel measurement resources and the codebook mode. The fourth group of channel measurement resources is the first group of channel measurement resources, or the fourth group of channel measurement resources is a channel measurement resource other than a first same channel measurement resource in the first group of channel measurement resources. The first same channel measurement resource is a same channel measurement resource in the first group of channel measurement resources and in a third group of channel measurement resources. The third group of channel measurement resources includes N resource pairs. Each of the N resource pairs includes at least one channel measurement resource in the first group of channel measurement resources and at least one channel measurement resource in the second group of channel measurement resources, and N is a positive integer. The second sub-CSI is related to a fifth group of channel measurement resources and the codebook mode. The fifth group of channel measurement resources is the second group of channel measurement resources, or the fifth group of channel measurement resources is a channel measurement resource other than a second same channel measurement resource in the second group of channel measurement resources. The second same channel measurement resource is a same channel measurement resource in the second group of channel measurement resources and in the third group of channel measurement resources. The third sub-CSI is related to the third group of channel measurement resources and the codebook mode. The third group of channel measurement resources includes N resource pairs. Each of the N resource pairs includes at least one channel measurement resource in the first group of channel measurement resources and at least one channel measurement resource in the second group of channel measurement resources.

Optionally, in a possible implementation of the eleventh aspect or the twelfth aspect, the first configuration information and the second configuration information are carried in at least one of the following: radio resource control RRC signaling, downlink control information DCI, and medium access control MAC.

A thirteenth aspect of embodiments of this application provides a communication device, which may be used in a single-TRP measurement scenario and/or an NCJT measurement scenario. The communication device is specifically a terminal device, and the communication device includes: an obtaining unit, configured to obtain first configuration information, second configuration information, and third configuration information, where the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources; and a sending unit, configured to send channel state information CSI to at least one network device, where the CSI is related to the first configuration information, the second configuration information, and the third configuration information.

A fourteenth aspect of embodiments of this application provides a communication device, which may be used in a single-TRP measurement scenario and/or an NCJT measurement scenario. The communication device is specifically a network device, and the communication device includes: a sending unit, configured to send first configuration information, second configuration information, and third configuration information to a terminal device, where the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources; and a receiving unit, configured to receive channel state information CSI from the terminal device, where the CSI is related to the first configuration information, the second configuration information, and the third configuration information.

Optionally, in a possible implementation of the thirteenth aspect or the fourteenth aspect, a part of channel measurement resources in a channel measurement resource set is the first group of channel measurement resources, and the other part of the channel measurement resources in the channel measurement resource set is the second group of channel measurement resources.

Optionally, in a possible implementation of the thirteenth aspect or the fourteenth aspect, the CSI includes at least one of first sub-CSI and second sub-CSI. The first sub-CSI is related to the first group of channel measurement resources and the first codebook mode. The second sub-CSI is related to the second group of channel measurement resources and the second codebook mode.

A fifteenth aspect of embodiments of this application provides a communication device, which may be used in a single-TRP measurement scenario and/or an NCJT measurement scenario. The communication device is specifically a terminal device, and the communication device includes: an obtaining unit, configured to obtain first configuration information, second configuration information, third configuration information, and fourth configuration information, where the first configuration information is used to configure a first group of channel measurement resources and a second group of channel measurement resources; the second configuration information is used to configure a first codebook mode related to a fourth group of channel measurement resources, where the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources includes N resource pairs; and each of the N resource pairs includes at least one channel measurement resource in the first group of channel measurement resources and at least one channel measurement resource in the second group of channel measurement resources; the third configuration information is used to configure a second codebook mode related to a fifth group of channel measurement resources, where the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and the fourth configuration information is used to configure a third codebook mode related to the third group of channel measurement resources; and a sending unit, configured to send channel state information CSI to at least one network device, where the CSI is related to the first configuration information, the second configuration information, the third configuration information, and the fourth configuration information.

A sixteenth aspect of embodiments of this application provides a communication device, which may be used in a single-TRP measurement scenario and/or an NCJT measurement scenario. The communication device is specifically a network device, and the communication device includes: a sending unit, configured to send first configuration information, second configuration information, third configuration information, and fourth configuration information to a terminal device, where the first configuration information is used to configure a first group of channel measurement resources and a second group of channel measurement resources; the second configuration information is used to configure a first codebook mode related to a fourth group of channel measurement resources, where the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources includes N resource pairs; and each of the N resource pairs includes at least one channel measurement resource in the first group of channel measurement resources and at least one channel measurement resource in the second group of channel measurement resources; the third configuration information is used to configure a second codebook mode related to a fifth group of channel measurement resources, where the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and the fourth configuration information is used to configure a third codebook mode related to the third group of channel measurement resources; and a receiving unit, configured to receive channel state information CSI from the terminal device, where the CSI is related to the first configuration information, the second configuration information, the third configuration information, and the fourth configuration information.

Optionally, in a possible implementation of the fifteenth aspect or the sixteenth aspect, a part of channel measurement resources in a channel measurement resource set is the first group of channel measurement resources, and the other part of the channel measurement resources in the channel measurement resource set is the second group of channel measurement resources.

Optionally, in a possible implementation of the fifteenth aspect or the sixteenth aspect, the CSI includes at least one of first sub-CSI, second sub-CSI, and third sub-CSI. The first sub-CSI is related to the fourth group of channel measurement resources and the first codebook mode. The second sub-CSI is related to the fifth group of channel measurement resources and the second codebook mode. The third sub-CSI is related to the third group of channel measurement resources and the third codebook mode.

A seventeenth aspect of embodiments of this application provides a communication device, which may be used in a single-TRP measurement scenario and/or an NCJT measurement scenario. The communication device is specifically a terminal device, and the communication device includes: an obtaining unit, configured to obtain indication information, first configuration information, and second configuration information, where the indication information indicates that a codebook used for channel measurement is a first codebook or a second codebook, the first configuration information is used to configure a parameter of the first codebook, and the second configuration information is used to configure a parameter of the second codebook; and a sending unit, configured to send channel state information CSI to the at least one network device, where the CSI is related to the indication information, the first configuration information, and the second configuration information.

An eighteenth aspect of embodiments of this application provides a communication device, which may be used in a single-TRP measurement scenario and/or an NCJT measurement scenario. The communication device is specifically a network device, and the communication device includes: a sending unit, configured to send indication information, first configuration information, and second configuration information to a terminal device, where the indication information indicates that a codebook used for channel measurement is a first codebook or a second codebook, the first configuration information is used to configure a parameter of the first codebook, and the second configuration information is used to configure a parameter of the second codebook; and a receiving unit, configured to receive channel state information CSI from the terminal device, where the CSI is related to the indication information, the first configuration information, and the second configuration information.

Optionally, in a possible implementation of the seventeenth aspect or the eighteenth aspect, the parameter of the first codebook includes at least one of the following: a first codebook subset restriction and a codebook mode. The parameter of the second codebook includes a second codebook subset restriction.

Optionally, in a possible implementation of the seventeenth aspect or the eighteenth aspect, a quantity of the at least one network device is 1, the codebook mode is a preset codebook mode, the preset codebook mode is a mode 1 or a mode 2, and the parameter of the first codebook includes the first codebook subset restriction and does not include the codebook mode.

A nineteenth aspect of embodiments of this application provides a communication device, which may be used in a single-TRP measurement scenario and/or an NCJT measurement scenario. The communication device is specifically a terminal device. The communication device includes: an obtaining unit, configured to obtain indication information, where the indication information is used by a network device to configure a preset mode of a first codebook or a second codebook for channel measurement, and the preset codebook mode is a mode 1 or a mode 2; and a sending unit, configured to send channel state information CSI to the network device, where the CSI is related to the indication information.

A twentieth aspect of embodiments of this application provides a communication device, which may be used in a single-TRP measurement scenario and/or an NCJT measurement scenario. The communication device is specifically a network device. The communication device includes: a sending unit, configured to send indication information to a terminal device, where the indication information is used by a network device to configure a preset mode of a first codebook or a second codebook for channel measurement, and the preset codebook mode is a mode 1 or a mode 2; and a receiving unit, configured to receive channel state information CSI from the terminal device, where the CSI is related to the indication information.

A twenty-first aspect of embodiments of this application provides a communication device, including a processor, where the processor is coupled to a memory, and the memory is configured to store a program or instructions. When the program or the instructions are executed by the processor, the communication device is enabled to implement the method in any one of the first aspect or the possible implementations of the first aspect; or the communication device is enabled to implement the method in any one of the third aspect or the possible implementations of the third aspect; or the communication device is enabled to implement the method in any one of the fifth aspect or the possible implementations of the fifth aspect; or the communication device is enabled to implement the method in any one of the seventh aspect or the possible implementations of the seventh aspect; or the communication device is enabled to implement the method in any one of the ninth aspect or the possible implementations of the ninth aspect.

A twenty-second aspect of embodiments of this application provides a communication device, including a processor, where the processor is coupled to a memory, and the memory is configured to store a program or instructions. When the program or the instructions are executed by the processor, the communication device is enabled to implement the method in any one of the second aspect or the possible implementations of the second aspect; or the communication device is enabled to implement the method in any one of the fourth aspect or the possible implementations of the fourth aspect; or the communication device is enabled to implement the method in any one of the sixth aspect or the possible implementations of the sixth aspect; or the communication device is enabled to implement the method in any one of the eighth aspect or the possible implementations of the eighth aspect; or the communication device is enabled to implement the method in any one of the tenth aspect or the possible implementations of the tenth aspect.

A twenty-third aspect of embodiments of this application provides a communication system, including the communication device according to the twenty-first aspect and/or the communication device according to the twenty-second aspect.

A twenty-fourth aspect of embodiments of this application provides a chip system. The chip system includes at least one processor, configured to support a communication device in implementing the function in any one of the first aspect or the possible implementations of the first aspect; or configured to support a communication device in implementing the function in any one of the third aspect or the possible implementations of the third aspect; or configured to support a communication device in implementing the function in any one of the fifth aspect or the possible implementations of the fifth aspect; or configured to support a communication device in implementing the function in any one of the seventh aspect or the possible implementations of the seventh aspect; or configured to support a communication device in implementing the function in any one of the ninth aspect or the possible implementations of the ninth aspect.

In a possible design, the chip system may further include a memory. The memory is configured to store program instructions and data that are necessary for the communication device. The chip system may include a chip, or may include the chip and another discrete component. Optionally, the chip system further includes an interface circuit. The interface circuit provides program instructions and/or data for the at least one processor.

A twenty-fifth aspect of embodiments of this application provides a chip system. The chip system includes at least one processor, configured to support a communication device in implementing the function in any one of the second aspect or the possible implementations of the second aspect; or configured to support a communication device in implementing the function in any one of the fourth aspect or the possible implementations of the fourth aspect; or configured to support a communication device in implementing the function in any one of the sixth aspect or the possible implementations of the sixth aspect; or configured to support a communication device in implementing the function in any one of the eighth aspect or the possible implementations of the eighth aspect; or configured to support a communication device in implementing the function in any one of the tenth aspect or the possible implementations of the tenth aspect.

In a possible design, the chip system may further include a memory. The memory is configured to store program instructions and data that are necessary for the communication device. The chip system may include a chip, or may include the chip and another discrete component. Optionally, the chip system further includes an interface circuit. The interface circuit provides program instructions and/or data for the at least one processor.

A twenty-sixth aspect of embodiments of this application provides a computer-readable medium. The computer-readable medium stores a computer program or instructions. When the computer program or the instructions are run on a computer, the computer is enabled to perform the method in any one of the first aspect or the possible implementations of the first aspect; or the computer is enabled to perform the method in any one of the second aspect or the possible implementations of the second aspect; or the computer is enabled to perform the method in any one of the third aspect or the possible implementations of the third aspect; or the computer is enabled to perform the method in any one of the fourth aspect or the possible implementations of the fourth aspect; or the computer is enabled to perform the method in any one of the fifth aspect or the possible implementations of the fifth aspect; or the computer is enabled to perform the method in any one of the sixth aspect or the possible implementations of the sixth aspect; or the computer is enabled to perform the method in any one of the seventh aspect or the possible implementations of the seventh aspect; or the computer is enabled to perform the method in any one of the eighth aspect or the possible implementations of the eighth aspect; or the computer is enabled to perform the method in any one of the ninth aspect or the possible implementations of the ninth aspect; or the computer is enabled to perform the method in any one of the tenth aspect or the possible implementations of the tenth aspect.

A twenty-seventh aspect of embodiments of this application provides a computer program product. When the computer program product runs on a computer, the computer is enabled to perform the method in any one of the first aspect or the possible implementations of the first aspect; or the computer is enabled to perform the method in any one of the second aspect or the possible implementations of the second aspect; or the computer is enabled to perform the method in any one of the third aspect or the possible implementations of the third aspect; or the computer is enabled to perform the method in any one of the fourth aspect or the possible implementations of the fourth aspect; or the computer is enabled to perform the method in any one of the fifth aspect or the possible implementations of the fifth aspect; or the computer is enabled to perform the method in any one of the sixth aspect or the possible implementations of the sixth aspect; or the computer is enabled to perform the method in any one of the seventh aspect or the possible implementations of the seventh aspect; or the computer is enabled to perform the method in any one of the eighth aspect or the possible implementations of the eighth aspect; or the computer is enabled to perform the method in any one of the ninth aspect or the possible implementations of the ninth aspect; or the computer is enabled to perform the method in any one of the tenth aspect or the possible implementations of the tenth aspect.

It can be learned from the foregoing technical solutions that this application has the following advantages: The codebook mode related to the channel measurement resource set is obtained via the second configuration information, so that the codebook mode can be used for all channel measurement resources. **In** comparison with the existing technology in which there are a plurality of codebook modes, a quantity of precoding matrix indicators (precoding matrix indications, PMIs) stored in the terminal device can be reduced, the delay of generating the PMIs can be reduced, and the time complexity and the space complexity can be reduced.

## BRIEF DESCRIPTION OF DRAWINGS

FIG. 1 is a diagram of a structure of an application scenario according to an embodiment of this application;
FIG. 2 is a diagram of another structure of an application scenario according to an embodiment of this application;
FIG. 3 is a schematic flowchart of a data processing method according to an embodiment of this application;
FIG. 4 is an example diagram of a channel measurement resource set according to an embodiment of this application;
FIG. 5 is another schematic flowchart of a data processing method according to an embodiment of this application;
FIG. 6 is another schematic flowchart of a data processing method according to an embodiment of this application;
FIG. 7 is another schematic flowchart of a data processing method according to an embodiment of this application;
FIG. 8 is another schematic flowchart of a data processing method according to an embodiment of this application;
FIG. 9 is another schematic flowchart of a data processing method according to an embodiment of this application;
FIG. 10 is another schematic flowchart of a data processing method according to an embodiment of this application;
FIG. 11 is a diagram of a structure of a communication device according to an embodiment of this application;
FIG. 12 is a diagram of another structure of a communication device according to an embodiment of this application;
FIG. 13 is a diagram of another structure of a communication device according to an embodiment of this application; and
FIG. 14 is a diagram of another structure of a communication device according to an embodiment of this application.

## DESCRIPTION OF EMBODIMENTS

This application provides a communication method and a related device, to reduce a quantity of PMIs stored in a terminal device, reduce a delay of generating the PMIs, and reduce time complexity and space complexity.

For ease of understanding, the following first describes related terms in embodiments of this application.

Current transmission mechanisms may be classified into two types: single-station transmission and multi-station joint transmission. The multi-station joint transmission further includes a plurality of transmission mechanisms, for example, coherent joint transmission (coherent joint transmission, CJT), non-coherent joint transmission (non-coherent joint transmission, NCJT), and dynamic point selection (dynamic point selection, DPS).

1. Single-station transmission

The single-station transmission means that each terminal device is served by only one network device. When the terminal device moves to a service range of another network device, cell handover needs to be performed.

In a CSI reporting framework of the single-station transmission mechanism, one CSI configuration (CSI report config) may be used to configure one set of channel measurement resources (channel measurement resources, CMRs) and one set of interference measurement resources (interference measurement resources, IMRs). The set of CMRs may be one CMR set, including a plurality of non-zero-power channel state information reference signal (non-zero-power channel state information resource set, NZP CSI-RS) resources. Optionally, the plurality of NZP CSI-RS resources are corresponding to a plurality of CSI-RS beams of a TRP, and different beams are corresponding to different directions in a cell. When reporting CSI, the terminal device may select one of the CMRs for measurement, and calculate and report the CSI. The CSI may include at least one of a CSI-RS resource indicator (CSI-RS resource indicator, CRI), a rank indicator (rank indicator, RI), a precoding matrix indicator (precoding matrix indicator, PMI), and a channel quality indicator (channel quality indicator, CQI).

In embodiments of this application, channel measurement needed for the single-station transmission may also be referred to as single-TRP measurement.

Specifically, in CSI calculation based on a single-TRP measurement assumption, the terminal device may perform the CSI calculation on one measurement resource, to obtain a group of CSI results.

The measurement resource herein is an NZP CSI-RS resource used for channel measurement and a resource that is used for interference measurement and that is associated with the NZP CSI-RS resource. The resource used for interference measurement is a CSI-IM resource, or the resource used for interference measurement is a CSI-IM resource and an NZP CSI-RS resource.

For example, a channel parameter between a TRP 1 and the terminal device is H1. H1 is an $M \times N_1$ matrix, M is a configured quantity of receive antennas of the terminal device, and $N_1$ is a configured quantity of transmit antennas of the TRP 1. The terminal device estimates the channel parameter H1 based on a reference signal sent by the TRP 1.

A base station configures the terminal device to estimate CSI for the TRP 1 based on H1, and the terminal device estimates an optimal precoding matrix $P_1$ during transmission. $P_1$ is an $N_1 \times r_1$ matrix, $r_1$ represents a quantity of streams/layers of data, and $P_1$ is an optimal codeword determined in a preset codebook (including several codewords). Index information corresponding to the codeword is referred to as a precoding matrix index (precoding matrix indicator, PMI), corresponding to a rank indicator (rank indicator, RI) fed back by the terminal device:

$$\{P_1, r_1\} = \arg\max \log_2(1 + \frac{\|H_1 P_1\|^2}{I_0 + N_0}) \qquad (0),$$

where $I_0$ represents interference, and $N_0$ represents interference. To be specific, all possible codewords (a quantity of columns of a specific codeword is corresponding to a quantity of ranks of the precoding matrix) in the preset codebook are traversed, so that a largest Shannon capacity is obtained based on a signal to interference plus noise ratio (signal to interference plus noise ratio, SINR). In an actual implementation process, another objective function, for example, some variant functions similar to a Shannon capacity, may be used. A specific objective function to be used is not limited in embodiments of this application.

For different codebook modes (Mode1 and Mode2 of a Type I-single panel codebook):

(1) In the different modes, preset codebook sets are different.
(2) In the different modes, precoding matrices and/or ranks obtained according to Formula (1) may also be different.
(3) In the different modes, parameters reported by a user equipment (User Equipment, UE) are also different.

2. Coherent joint transmission CJT

In the CJT, a plurality of network devices transmit data to the terminal device through coherent transmission. The plurality of network devices serving the terminal device all know data information to be transmitted to the terminal device, and each network device needs to know CSI between the network device and the terminal device and CSI between another network device and the terminal device. Therefore, the plurality of network devices are like a plurality of antenna arrays that are distributed, may jointly precode a same layer of data to be transmitted, and are equivalent to a large network device. The "coherent transmission" means that the plurality of network devices may jointly transmit a data stream, so that signals sent by the plurality of network devices can be superimposed in a same direction when the signals arrive at the terminal device, to cause a fold increase in received signal power and greatly reduce interference. In other words, the coherent transmission may convert interference between the plurality of network devices into wanted signals, to significantly improve data transmission performance.

In the CJT transmission, a same data stream is from different TRPs. In the CJT, coherent joint transmission is performed between the TRPs (an increase in a quantity of antennas brings beamforming gains and an increase in a quantity of the TRPs brings power gains). Therefore, interference control is more flexible, and cell-average performance and cell-edge performance can be significantly improved. The CJT is applicable to a densely deployed cellular network with a large service volume. However, the CJT has strict requirements on a delay and a capacity of backhaul between the TRPs. In Rel-18, the CJT transmission needs to be standardized, and the CJT transmission is supported between a maximum of four TRPs.

For a specific implementation of the CJT, two TRPs are used as an example. A TRP 0 and the TRP 1 simultaneously send same data to the UE. Only one of the two TRPs transmits one piece of DCI, to schedule one physical downlink shared channel (physical downlink shared channel, PDSCH). Each stream/layer (corresponding to one demodulation reference signal (demodulation reference signal, DMRS) port) of the PDSCH is transmitted by all the TRPs (the two TRPs in the example, and a maximum of 4 TRPs). In addition, the TRP 1 may alternatively send DCI 1 to the UE. An example in which the TRP 0 sends the DCI is used for description herein, and is not intended to limit this application.

In embodiments of this application, channel measurement needed for the CJT transmission may also be referred to as CJT measurement.

3. Non-coherent joint transmission NCJT

In the non-coherent transmission mechanism, serving network devices transmit different data streams for the terminal device. A precoding matrix of each data stream may be independently determined based on CSI from a corresponding serving network device to the terminal device, or may be jointly determined based on CSI from the serving network devices to the terminal device. An advantage of the transmission mechanism is that data transmission of more streams can be provided for the terminal device, and user experience of a terminal device at a cell edge is improved. In addition, the network devices do not need to dynamically exchange information (for example, CSI information or scheduling information), to avoid an exchange delay. The transmission mechanism is more applicable to a scenario in which network devices are interconnected by using non-ideal backhaul (backhaul). However, because the network devices transmit different layers of data respectively, interference exists between the layers of data, is referred to as "inter-stream interference", and limits data transmission performance to some extent.

In a CSI reporting framework of the NCJT mechanism, one CSI configuration (CSI report config) may be used to configure a plurality of sets of CMRs and one set of IMRs, and the plurality of sets of CMRs may be respectively corresponding to reference signals sent by a plurality of TRPs. When reporting CSI, the terminal device may report one CRI to select J TRPs, where J is a positive integer and is less than or equal to a total quantity of the TRPs, and report J pieces of CSI (which may each include at least one of an RI, a PMI, and a CQI). In the NCJT mechanism, during CSI calculation, it needs to be assumed that inter-stream interference is caused between data streams sent by different TRPs, so that channel quality can be correctly reflected.

In embodiments of this application, channel measurement needed for the NCJT transmission may also be referred to as multi-TRP NCJT measurement.

Complexity of CSI measurement based on the single-TRP measurement assumption is different from complexity of CSI measurement based on the multi-TRP measurement assumption. Specifically, in the CSI calculation based on the single-TRP measurement assumption, the terminal device may perform the CSI calculation on one measurement resource, to obtain a group of CSI results. In the CSI calculation based on an NCJT measurement mode, the terminal device may perform the CSI calculation on two measurement resources, to obtain a group of CSI results. However, signals from the two TRPs interfere with each other, and a channel measurement result of the terminal device on a measurement resource corresponding to the TRP 1 is interfered with by a signal transmitted by a TRP 2. Similarly, a channel measurement result of the terminal device on a measurement resource corresponding to the TRP 2 is also interfered with by a signal transmitted by the TRP 1. To obtain better performance, the terminal device needs to perform joint CSI calculation on the two measurement resources. However, in the CSI calculation based on a single-TRP measurement mode, the terminal device needs to perform only independent CSI calculation on each measurement resource, and much lower complexity is needed. In other words, calculation complexity needed for performing the joint CSI calculation on the two measurement resources based on the NCJT measurement assumption is far higher than total calculation complexity needed for performing the independent CSI calculation on the two measurement resources based on the single-TRP measurement assumption.

The measurement resource herein is an NZP CSI-RS resource used for channel measurement and a resource that is used for interference measurement and that is associated with the NZP CSI-RS resource. The resource used for interference measurement is a CSI-IM resource, or the resource used for interference measurement is a CSI-IM resource and an NZP CSI-RS resource. During measurement, NZP CSI-RS resources used for channel measurement are from two different TRPs, to simulate the NCJT transmission. In other words, calculation complexity needed for performing the joint CSI calculation on the two measurement resources based on the NCJT measurement assumption is far higher than total calculation complexity needed for performing the independent CSI calculation on the two measurement resources based on the single-TRP measurement assumption.

For example, the channel parameter between the TRP 1 and the terminal device is H1, H1 is the $M \times N_1$ matrix, M is the configured quantity of receive antennas of the terminal device, and $N_1$ is the configured quantity of transmit antennas of the TRP 1. A channel parameter between the TRP 2 and the terminal device is H2, H2 is an $M \times N_2$ matrix, and $N_2$ is a configured quantity of transmit antennas of the TRP 2. The terminal device estimates the channel parameter H1 based on a reference signal sent by the TRP 1. Similarly, the terminal device may further obtain the channel parameter H2 through estimation based on an NZP CSI-RS sent by the TRP 2.

A method for implementing CSI reporting based on the multi-TRP measurement assumption is as follows: It is implemented through CSI reporting based on an assumption in which single-TRP measurement is performed twice. Specifically, the base station configures the terminal device to estimate CSI for the TRP 1 based on H1, and the terminal device estimates an optimal precoding matrix $P_1$ during transmission. $P_1$ is an $N_1 \times r_1$ matrix, $r_1$ represents a quantity of streams/layers of data, and $P_1$ is an optimal codeword determined in a preset codebook (including several codewords). Index information corresponding to the codeword is referred to as the precoding matrix index (precoding matrix indicator, PMI), and $r_1$ is corresponding to a rank indicator (rank indicator, RI) fed back by the terminal device:

$$\{P_1, r_1\} = \arg\max \log_2(1 + \frac{\|H_1 P_1\|^2}{I_0 + N_0}) \qquad (1)$$

To be specific, all possible codewords (a quantity of columns of a specific codeword is corresponding to a quantity of ranks of the precoding matrix) in the preset codebook are traversed, so that a largest Shannon capacity is obtained based on a signal to interference plus noise ratio (signal to interference plus noise ratio, SINR). In an actual implementation process, another objective function, for example, some variant functions similar to a Shannon capacity, may be used. A specific objective function to be used is not limited in embodiments of this application. Similarly, the base station configures the terminal device to estimate CSI for the TRP 2 based on H2:

$$\{P_2, r_2\} = \arg\max \log_2(1 + \frac{\|H_2 P_2\|^2}{I_0 + N_0}) \qquad (2)$$

Actually, in a multi-TRP transmission process, a SINR 1 of a signal received by the terminal device from the TRP 1 and a SINR 2 of a signal received by the terminal device from the TRP 2 should be respectively represented as:

$$SINR_1 = \frac{\|H_1 P_1\|^2}{\|H_2 P_2\|^2 + I_0 + N_0} \qquad (3);$$

and

$$SINR_2 = \frac{\|H_2 P_2\|^2}{\|H_1 P_1\|^2 + I_0 + N_0} \qquad (4)$$

An estimation result of $\{P_1, r_1\}$ affects an estimation result of $\{P_2, r_2\}$, and vice versa. Therefore, the terminal device needs to perform joint estimation to obtain optimal performance. In other words, the following form needs to be satisfied:

$$\{P_1, r_1, P_2, r_2\} = \arg\max\left( \log_2(1 + \frac{\|H_1 P_1\|^2}{\|H_2 P_2\|^2 + I_0 + N_0}) + \log_2(1 + \frac{\|H_2 P_2\|^2}{\|H_1 P_1\|^2 + I_0 + N_0}) \right) \qquad (5)$$

It can be learned from Formula (5) that, because four optimal vectors need to be jointly estimated, complexity of the joint estimation is far greater than complexity of estimating two groups of two optimal vectors respectively according to Formula (1) and Formula (2).

Complexity of the NCJT measurement is different from that of the single-TRP measurement performed twice and that of measurement performed by the UE. Although an existing single-TRP codebook is reused for NCJT measurement of each TRP, a new codebook type: an "NCJT" codebook, is also defined for the NCJT measurement in a standard.

4. Codebook

The codebook is a matrix set. The codebook may help the base station select a proper precoding matrix to better serve the user.

The user equipment obtains channel state information (CSI) by measuring pilot information (CSI-RS) sent by the base station, and accurately feeds back the channel state information to the base station. This plays an important role in performance of a MIMO system. Therefore, accuracy of a codebook design, a degree of codebook restoration of a corresponding feedback PMI, and feedback overheads affect overall performance of the system. A requirement on a data transmission rate is stricter in a 5G scenario. Therefore, two types of codebooks are defined in the 5G new radio R15: a common-precision codebook (Type I codebook) and a high-precision codebook (Type II codebook).

5. Type I-single panel codebook (Type I-single panel codebook)

A Type I-single panel is a two-stage codebook mode: $W = W_1 W_2$.

The type I-single panel supports two codebook modes: {Mode1, Mode2}. Mode1: $W_1$ includes one column vector (one column vector is in one polarization direction, a diagonal block matrix includes two polarization directions, and there are a total of two column vectors). Mode1: $W_1$ includes four column vectors (four column vectors are in one polarization direction, a diagonal block matrix includes two polarization directions, and there are a total of eight column vectors).

Because structures of different codebook modes are different, values of a same parameter may represent completely different precoding matrices in the different modes. A quantity of Type 1-single panel codebooks is related to a quantity of CSI-RS ports (a quantity of ports), a quantity of streams (a quantity of layers), and the like. Usually, a larger quantity of ports indicates a larger quantity of Type 1-single panel codebooks, and a larger quantity of streams indicates a larger quantity of Type 1-single panel codebooks.

6. Type II codebook

$$W = W_1 W_2 W_f^H$$

Three-stage codebook structures corresponding to R16 Type II and R17 Type II are as follows: .

For an R16 Type II NP codebook, $W_1 \in N^{P \times 2L}$ is a spatial domain selection matrix, and $P \times 2L$ represents that 2L beams are selected from P spatial domain beams. $W_f \in C^{N_3 \times M}$ is a frequency domain compression matrix, M represents a column selected from a discrete Fourier transform DFT matrix set, $N_3$ is a quantity of frequency domain RB resources or a quantity of frequency domain subbands, and $W_2 \in N^{2L \times M}$ is a combination coefficient quantized according to a quantization criterion.

For an R17 Type II PS codebook, $W_1 \in N^{P \times K_1}$ is a port selection matrix, and $P \times K_1$ represents that $K_1$ ports are selected from P ports. $W_f E C^{N_3 \times M}$ is a frequency domain compression matrix, $N_3 \times M$ represents M columns selected from a discrete Fourier transform DFT matrix set, $N_3$ is a quantity of frequency domain RB resources or a quantity of frequency domain subbands, and $W_2 \in N^{K_1 \times M_v}$ is a combination coefficient quantized according to the quantization criterion. After completing channel measurement, the UE needs to report measurement information in uplink control information (Uplink Control Information, UCI). The measurement information specifically includes parameters such as a selected spatial domain/CSI-RS port ($W_1$), a frequency domain vector indication ($W_f$), a weighting coefficient corresponding to the spatial domain/CSI-RS port or the frequency domain vector, and a location of the weighting coefficient ($W_2$) in a codebook.

7. Medium- and high-speed CSI

In a high-speed scenario, a channel is greatly affected by Doppler at different moments. Therefore, a PMI calculated by the UE based on a channel measured at a moment is difficult to be used at a future moment. Therefore, in a medium- and high-speed CSI subject in Rel-18, the UE may perform channel prediction by measuring a channel at a plurality of moments, then calculates a PMI at a future moment, and reports the PMI. For the medium- and high-speed CSI, a Type 2 codebook needs to be further enhanced.

Currently, for the NCJT, a codebook (codebook) configuration of each TRP is configured in codebookConfig-r17 in an existing protocol 331. A codebook parameter of a 1st TRP is configured by using type1-singlepanel-group1-r17, for example, a rank restriction (ri-restriction), a codebook restriction (codebooksubsetrestriction), a quantity of antenna ports (numofantennaport), and an N1-N2 configuration (n1-n2). A codebook parameter of a 2nd TRP is configured by using type1-singlepanel-group2-r17, for example, a rank restriction (ri-restriction), a codebook restriction (codebooksubsetrestriction), a quantity of antenna ports (numofantennaport), and an N1-N2 configuration (n1-n2).

When the UE performs sTRP CSI measurement and NCJT CSI measurement for a TRP, a codebook parameter configuration is shared, and the Type-singlepanel codebook is shared.

Theoretically, when the UE performs the sTRP CSI measurement on a channel measurement resource by using the type-singlepanel codebook, codebookMode needs to be configured. When the UE performs the NCJT CSI measurement by using the Type-singlepanel codebook, codebookMode also needs to be configured. However, codebookMode is not configured in codebookConfig-r17.

Therefore, how to specifically configure codebookMode is an urgent problem to be resolved.

Therefore, embodiments of this application provide a communication method. One codebook mode related to a channel measurement resource set is obtained via second configuration information, so that the codebook mode can be used for all channel measurement resources. Compared with an existing technology in which there are a plurality of codebook modes, a quantity of PMIs stored in the terminal device can be reduced, a delay of generating the PMIs can be reduced, and time complexity and space complexity can be reduced.

Before the method provided in embodiments of this application is described, an application scenario to which the method provided in embodiments of this application is applicable is first described. The application scenario includes but is not limited to scenarios such as point-to-point transmission between a network device and a terminal device, point-to-point transmission between terminal devices, multi-hop/relay transmission between a network device and a terminal device, and dual connectivity (Dual Connectivity, DC) or multi-connectivity between a plurality of network devices and a terminal device.

Transmission mechanisms are described in the foregoing related terms. For a scenario to which the NCJT transmission is applicable, there are two cases, which are separately described below.

A first case is multi-DCI-based NCJT.

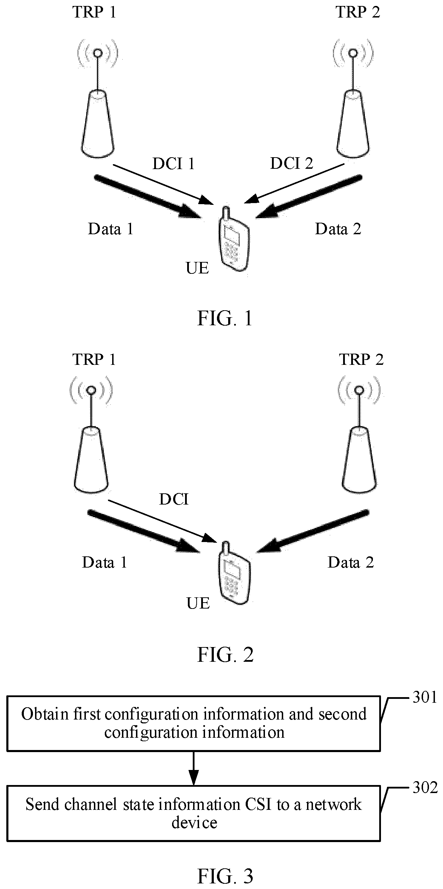

In this case, a communication scenario is shown in FIG. 1. Two TRPs each transmit one piece of DCI, and each piece of DCI is used to schedule one PDSCH. In other words, the two TRPs schedule the two PDSCHs to send downlink data to a same UE.

Specifically, a TRP 1 sends DCI 1 to the UE, to schedule a PDSCH 1 to send data 1. A TRP 2 sends DCI 2 to the UE, to schedule a PDSCH 2 to send data 2.

A second case is single-DCI-based NCJT.

In this case, a communication scenario is shown in FIG. 2. Only one of two TRPs transmits one piece of DCI to schedule one PDSCH. However, a part of streams/layers (corresponding to a part of demodulation reference signal (demodulation reference signal, DMRS) ports) in the PDSCH are transmitted by one TRP, and the other part of streams/layers (corresponding to the other part of the DMRS ports) are transmitted by the other TRP.

Specifically, a TRP 1 sends DCI to a UE, to schedule a first group of streams/layers/DMRS ports to send data 1 to the UE. A TRP 2 schedules the other group of streams/layers/DMRS ports to send data 2 to the UE. The two groups of streams/layers/DMRS ports belong to a PDSCH scheduled by using the DCI 1. In addition, the TRP 2 may alternatively send DCI to the UE. An example in which the TRP 1 sends the DCI is used for description herein, and is not intended to limit this application.

It may be understood that the communication scenarios in FIG. 1 and FIG. 2 are described by using two TRPs and one UE as an example. During actual application, the communication scenario may further include more TRPs and UEs. This is not specifically limited herein.

The terminal device in embodiments of this application may also be referred to as a terminal, and may be a device having a wireless transceiver function. The terminal device may be deployed on land, including an indoor device, an outdoor device, a handheld device, or a vehicle-mounted device; or may be deployed on a water surface (for example, on a ship); or may be deployed in the air (for example, on an airplane, a balloon, and a satellite). The terminal device may be a UE, and the UE may be a handheld device, a vehicle-mounted device, a wearable device, or a computing device that has a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city, a wireless terminal in a smart home, or the like. In embodiments of this application, an apparatus configured to implement a function of the terminal may be a terminal; or may be an apparatus, for example, a chip system, that can support the terminal in implementing the function. The apparatus may be mounted in the terminal. In embodiments of this application, the chip system may include a chip, or may include the chip and another discrete component. In the technical solutions provided in embodiments of this application, an example in which the apparatus configured to implement the function of the terminal is the terminal, and the terminal is the UE is used to describe the technical solutions provided in embodiments of this application.

The network device in embodiments of this application includes an access network device, for example, a base station. The BS may be a device that is deployed in a radio access network and that can perform wireless communication with the terminal. The base station may be in a plurality of forms, for example, a macro base station, a micro base station, a relay station, and an access point. For example, the base station in embodiments of this application may be a base station in 5G. The base station in 5G may also be referred to as a 5G base station (Next-Generation NodeB, gNB). In embodiments of this application, an apparatus configured to implement a function of the network device may be a network device; or may be an apparatus, for example, a chip system, that can support the network device in implementing the function. The apparatus may be mounted in the network device. In the technical solutions provided in embodiments of this application, an example in which the apparatus configured to implement the function of the network device is the network device, and the network device is the base station is used to describe the technical solutions provided in embodiments of this application. The network device in embodiments of this application may alternatively be a TRP or the like.

The communication method provided in embodiments of this application is described in detail below. The method may be performed by a terminal device. Alternatively, the method may be performed by a component (for example, a processor, a chip, or a chip system) of the terminal device. Certainly, the method may alternatively be performed by a communication system including a terminal device and a network device. The method may be applied to a single-TRP measurement scenario and/or an NCJT measurement scenario. FIG. 3 is a schematic flowchart of a communication method according to an embodiment of this application. The method may include step 301 and step 302. The following describes step 301 and step 302 in detail.

Step 301: Obtain first configuration information and second configuration information.

A terminal device may obtain the first configuration information and the second configuration information through configuration/preconfiguration. The configuration means that a network device like a base station or a server sends configuration information of some parameters or values of the parameters to the terminal device via a message or signaling, so that the terminal device determines a communication parameter or a transmission resource based on the values or the information. The preconfiguration is similar to the configuration. The preconfiguration may be a manner in which the network device like the base station or the server sends parameter information or the values to the terminal device over a communication link or on a carrier, or may be a manner in which a corresponding parameter or parameter value is defined (for example, the parameter value is clearly specified in a standard), or a related parameter or value is written into the terminal device in advance. This is not limited in this application. Further, these values and parameters may be changed or updated.

In a possible implementation, the terminal device receives information/signaling sent by the network device. The information/signaling includes the first configuration information and the second configuration information. Alternatively, the information/signaling indicates the first configuration information and the second configuration information.

Optionally, the first configuration information and the second configuration information are carried in at least one of the following: RRC signaling, DCI, a MAC CE, and the like.

In another possible implementation, the first configuration information and the second configuration information are preconfigured in the terminal device.

The first configuration information in this embodiment of this application is used to configure a channel measurement resource set. The channel measurement resource set includes a first group of channel measurement resources and a second group of channel measurement resources. The second configuration information is used to configure one codebook mode related to the channel measurement resource set. A codebook corresponding to the codebook mode is used by the terminal device to perform channel measurement. It may be understood as that all measurement resources are configured by using one codebook mode. Specifically, the codebook mode may be used to perform configuration for all single-TRP measurement, or the codebook mode may be used to perform configuration for all single-TRP measurement and NCJT measurement.

Optionally, the first configuration information is NZP-CSI-RS-ResourceSet. The channel measurement resource set is Resource Groups, the first group of channel measurement resources is Group 1, and the second group of channel measurement resources is Group 2. The second configuration information is codebook configuration information (codebookConfig) or codebookMode in codebookConfig.

The channel measurement resource set includes $K_s$ channel measurement resources, the first group of channel measurement resources includes $K_1$ channel measurement resources, and the second group of channel measurement resources includes $K_2$ channel measurement resources, where $K_1 \geq 1$ and $K_2 \geq 1$. Usually, a part of channel measurement resources in the channel measurement resource set is the first group of channel measurement resources, and the other part of the channel measurement resources in the channel measurement resource set is the second group of channel measurement resources. That is, $K_s = K_1 + K_2$. It may also be understood as that the channel measurement resource set is a union set of the first group of channel measurement resources and the second group of channel measurement resources.

In addition, that the channel measurement resource set is related to one codebook mode may be reflected in that the first configuration information and the second configuration information belong to report configuration information (CSI-ReportConfig).

Further, when the second configuration information is codebookConfig, the second configuration information may further indicate a PMI restriction. In other words, codebookConfig includes codebookMode and the PMI restriction.

To reduce redundancy, the first group of channel measurement resources and the second group of channel measurement resources usually do not have a same channel measurement resource. In other words, the first group of channel measurement resources is different from the second group of channel measurement resources.

If the communication method is applied to an NCJT scenario, the channel measurement resource set may further include a third group of channel measurement resources, a fourth group of channel measurement resources, and a fifth group of channel measurement resources. The fourth group of channel measurement resources is associated with a first network device, and the fifth group of channel measurement resources is associated with a second network device. The third group of channel measurement resources is associated with the first network device and the second network device. In this case, it may be understood as that all measurement resources are configured by using one codebook mode. To be specific, when the terminal device performs NCJT CSI measurement, codebook modes of different TRPs are the same. Optionally, the second configuration information is configured by the first network device/the second network device for the terminal device. The third group of channel measurement resources, the fourth group of channel measurement resources, and the fifth group of channel measurement resources are equivalently extracted from the first group of channel measurement resources and the second group of channel measurement resources. Therefore, configuration information of the third group of channel measurement resources, the fourth group of channel measurement resources, and the fifth group of channel measurement resources may be from corresponding configuration information of channel measurement resources extracted from the first group of channel measurement resources and the second group of channel measurement resources. In addition, the third group of channel measurement resources, the fourth group of channel measurement resources, and the fifth group of channel measurement resources are subsequently described, and details are not described herein.

Further, same codebookMode is used for the single-TRP measurement and the NCJT measurement, and the terminal device needs to generate and store candidate PMIs in only one mode. Therefore, time complexity and space storage complexity are low.

The third group of channel measurement resources includes N resource pairs (Resource Pairs). Each of the N resource pairs includes at least one channel measurement resource in the first group of channel measurement resources and at least one channel measurement resource in the second group of channel measurement resources, and N is a positive integer. One resource pair usually includes one channel measurement resource in the first group of channel measurement resources and one channel measurement resource in the second group of channel measurement resources.

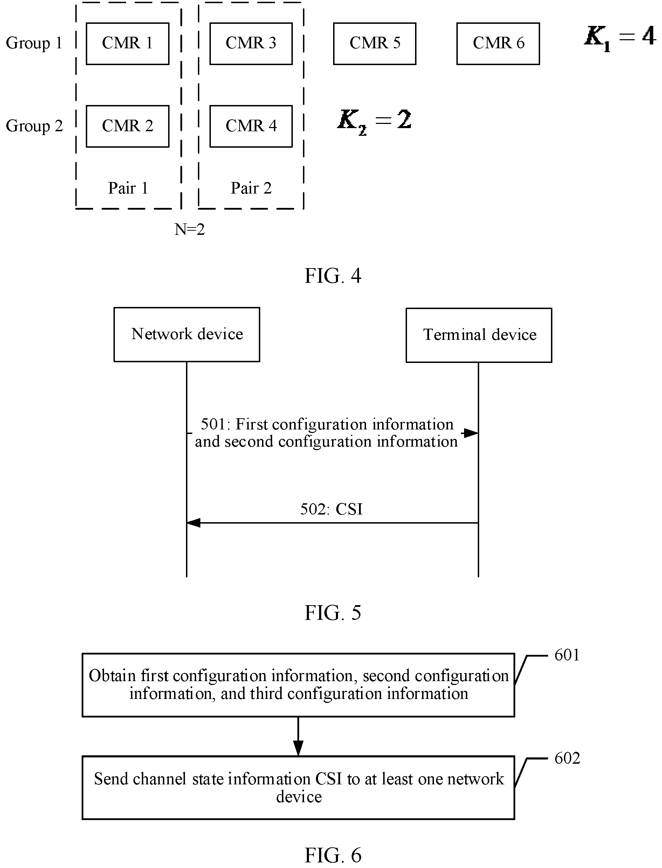

For example, in the NCJT scenarios shown in FIG. 1 and FIG. 2, in a case of the single-TRP measurement, the first group of channel measurement resources is related to the TRP 1, and the second group of channel measurement resources is related to the TRP 2. If different TRPs have different identifiers, different measurement resources may be associated with different TRP resources. Alternatively, different TRPs are configured by using different fields in an information element (information element), and the different TRPs are distinguished based on the different fields. In a case of the NCJT measurement, the fourth group of channel measurement resources is related to the TRP 1, and the fifth group of channel measurement resources is related to the TRP 2. The third group of channel measurement resources is related to the TRP 1 and the TRP 2. FIG. 4 shows an example of the channel measurement resource set. In this example, the channel measurement resource set includes a CMR 1, a CMR 2, a CMR 3, a CMR 4, a CMR 5, and a CMR 6. The first group of channel measurement resources Group 1 associated with the TRP I includes the CMR 1, the CMR 3, the CMR 5, and the CMR 6. The second group of channel measurement resources Group 2 associated with the TRP 2 includes the CMR 2 and the CMR 4. The third group of channel measurement resources associated with the TRP I and the TRP 2 include Pair 1 and Pair 2. That is, $K, =6$, $K_1 = 4$, $K_2 = 2$, and N=2.

There are a plurality of cases of the fourth group of channel measurement resources and the fifth group of channel measurement resources, and the cases are separately described below.

In a first case, a channel measurement resource used for the NCJT measurement may be used for the single-TRP measurement.

In this case, the terminal device is configured with sharedCMR. In this case, the channel measurement resource used by the terminal device to perform the NCJT measurement may be used for the single-TRP measurement.

In this case, the fourth group of channel measurement resources is the first group of channel measurement resources, and the fifth group of channel measurement resources is the second group of channel measurement resources.

This case may also be understood as that a channel measurement resource used by the terminal device to perform the single-TRP measurement may be a channel measurement resource used for the NCJT measurement.

For example, the example in FIG. 4 is still used. In the first case, the fourth group of channel measurement resources is the same as the first group of channel measurement resources, and the fifth group of channel measurement resources is the same as the second group of channel measurement resources. In other words, the fourth group of channel measurement resources includes the CMR 1, the CMR 3, the CMR 5, and the CMR 6. The fifth group of channel measurement resources includes the CMR 2 and the CMR 4.

In a second case, a channel measurement resource used for the NCJT measurement cannot be used for the single-TRP measurement.

In this case, the terminal device is not configured with sharedCMR. In this case, the channel measurement resource used by the terminal device to perform the NCJT measurement cannot be used for the single-TRP measurement.

In this case, the fourth group of channel measurement resources is a channel measurement resource other than a first same channel measurement resource in the first group of channel measurement resources, and the first same channel measurement resource is a same channel measurement resource in the first group of channel measurement resources and in the third group of channel measurement resources. The fifth group of channel measurement resources is a channel measurement resource other than a second same channel measurement resource in the second group of channel measurement resources, and the second same channel measurement resource is a same channel measurement resource in the second group of channel measurement resources and in the third group of channel measurement resources.

This case may also be understood as that a channel measurement resource used by the terminal device to perform the single-TRP measurement cannot be a channel measurement resource used for the NCJT measurement.

For example, the example in FIG. 4 is still used. In the second case, assuming that the CMR 3 is used for the NCJT measurement of the TPR 1, the CMR 3 cannot be used for the single-TRP measurement of the TPR 1. In other words, the fourth group of channel measurement resources includes the CMR 5 and the CMR 6, and the fifth group of channel measurement resources is an empty set.

It should be noted that an obtaining mechanism for obtaining the first configuration information and the second configuration information by the terminal device in step 301 is not limited in this embodiment, and the foregoing implementation is merely used as an implementation example for description.

Step 302: Send channel state information CSI to the network device.

After obtaining the first configuration information and the second configuration information, the terminal device may send the CSI to the network device. The CSI is related to the first configuration information and the second configuration information. Correspondingly, the network device receives the CSI sent by the terminal device.

Specifically, the terminal device determines the CSI based on the first configuration information and the second configuration information, and sends the CSI to the network device.

It should be noted that if a manner in which the terminal device obtains the configuration information (that is, the first configuration information and the second configuration information) is receiving the message/signaling sent by the network device, the network device in this step may be a network device that sends the configuration information, or may be another network device. This is not specifically limited herein. For example, the first network device sends the configuration information to the terminal device, and the terminal device sends the CSI to the second network device after obtaining the CSI based on the configuration information.

For example, a network device is a network device that sends configuration information. A procedure in this embodiment may be shown in FIG. 5. The procedure includes step 501 and step 502. Step 501: The network device sends first configuration information and second configuration information to a terminal device. Step 502: The terminal device sends CSI to the network device. Correspondingly, the network device receives the CSI sent by the terminal device. The CSI is related to the first configuration information and the second configuration information.

The CSI in this embodiment includes at least one of first sub-CSI, second sub-CSI, and third sub-CSI. The first sub-CSI may be understood as a single-station measurement result corresponding to a first network device, and the second sub-CSI may be understood as a single-station measurement result corresponding to a second network device. The third sub-CSI may be understood as an NCJT measurement result corresponding to the first network device and the second network device.

In this embodiment of this application, in a single-station measurement scenario and an NCJT measurement scenario, the terminal device may report one, two, or three of the foregoing measurement results. A quantity of the reported measurement results is mainly related to X and a reporting mode (CSI-ReportMode) configured by the network device for the terminal device. The reporting mode includes a reporting mode 1 and a reporting mode 2. The reporting mode 1 indicates that the terminal device needs to report a single-station measurement result and the NCJT measurement result (that is, the CSI includes the first sub-CSI and the third sub-CSI, or the CSI includes the second sub-CSI and the third sub-CSI, or the CSI includes the first sub-CSI, the second sub-CSI, and the third sub-CSI) to the network device. The reporting mode 2 indicates that the terminal device needs to report an optimal result (that is, the CSI includes one of the first sub-CSI, the second sub-CSI, and the third sub-CSI) in the single-station measurement results and the NCJT measurement result to the network device. X indicates a quantity of reported single-station measurement results, where $X \in \{0,1,2\}$. For example, if the reporting mode is the reporting mode 1, and X=2, the CSI includes the first sub-CSI, the second sub-CSI, and the third sub-CSI.

The CSI or the sub-CSI in this embodiment of this application includes at least one of a CSI-RS resource indicator (CSI-RS resource indicator, CRI), a rank indicator (rank indicator, RI), a precoding matrix indicator (precoding matrix indicator, PMI), and a channel quality indicator (channel quality indicator, CQI).

It may be understood that the CRI may alternatively be information that does not belong to the CSI. In other words, the CRI is information other than the CSI. For example, when the CRI does not belong to information in the CSI, the terminal device may further send the CRI to the network device.

In this embodiment of this application, based on different manners of measuring the CSI by the terminal device, a process of determining the CSI includes at least one of the following.

A first case is NCJT measurement.

In this case, the third sub-CSI is related to a third group of channel measurement resources and a codebook mode.

Optionally, the terminal device determines the CSI by using the third group of channel measurement resources and the codebook mode. For descriptions of the NCJT measurement, refer to the descriptions of the NCJT measurement in the foregoing related terms. Details are not described herein again.

If different TRPs use different codebook modes (codebookMode), preset codebook sets of the different TRPs are different in the NCJT measurement. It is assumed that there are 100 candidate PMIs in Mode1, and there are 200 candidate PMIs in Mode2. For example, the base station configures Mode1 for a TRP 1, and configures Mode2 for a TRP 2 (that is, the method in this embodiment is not used). In this case, the terminal device needs to generate the 100 PMIs in Mode1, and also needs to generate the 200 PMIs in Mode2, and store the PMIs. Both time complexity and space complexity are high.

The second configuration information in this embodiment is used to configure a codebook mode related to a channel measurement resource set. That is, one mode is configured for all resources. Assuming that a codebook mode configured by the base station in codebookConfig-r17 is Mode1, the terminal device needs to generate and store only the 100 candidate PMIs in Mode1. Therefore, the time complexity and the space storage complexity are low. Then, the terminal device obtains, based on preset PMI sets corresponding to the two TRPs and according to Formula (1), $\{P_1,r_1,P_2,r_2\}$ in the NCJT measurement, and reports $\{P_1,r_1,P_2,r_2\}$ to the network device.

A second case is single-TRP measurement.

In this case, the first sub-CSI is related to a fourth group of channel measurement resources and a codebook mode. The second sub-CSI is related to a fifth group of channel measurement resources and the codebook mode.

Optionally, the terminal device determines the first sub-CSI by using the fourth group of channel measurement resources and the codebook mode. The terminal device determines the second sub-CSI by using the fifth group of channel measurement resources and the codebook mode. For descriptions of the single-TRP measurement, refer to the descriptions of the single-TRP measurement in the foregoing related terms. For descriptions of the fourth group of channel measurement resources and the fifth group of channel measurement resources, refer to the corresponding descriptions in step 301. Details are not described herein again.

For example, the foregoing example is still used. After determining the first sub-CSI and the second sub-CSI, the terminal device reports the first sub-CSI to the TRP 1 related to the fourth group of channel measurement resources, and reports the second sub-CSI to the TRP 2 related to the fifth group of channel measurement resources.

In this embodiment of this application, one codebook mode related to the channel measurement resource set is obtained via the second configuration information, so that the codebook mode can be used for all channel measurement resources. Compared with an existing technology in which there are a plurality of codebook modes, a quantity of PMIs stored in the terminal device can be reduced, a delay of generating the PMIs can be reduced, and time complexity and space complexity can be reduced.

FIG. 6 is another schematic flowchart of a communication method according to an embodiment of this application. The method may be performed by a terminal device. Alternatively, the method may be performed by a component (for example, a processor, a chip, or a chip system) of the terminal device. Certainly, the method may alternatively be performed by a communication system including the terminal device and a network device. The method may be applied to a single-TRP measurement scenario and/or an NCJT measurement scenario. The method may include step 601 and step 602. The following describes step 601 and step 602 in detail.

Step 601: Obtain first configuration information, second configuration information, and third configuration information.

The terminal device may obtain the first configuration information, the second configuration information, and the third configuration information through configuration/preconfiguration. The configuration means that a network device like a base station or a server sends configuration information of some parameters or values of the parameters to the terminal device via a message or signaling, so that the terminal device determines a communication parameter or a transmission resource based on the values or the information. The preconfiguration is similar to the configuration. The preconfiguration may be a manner in which the network device like the base station or the server sends parameter information or values to the terminal device over a communication link or on a carrier, or may be a manner in which a corresponding parameter or parameter value is defined (for example, the parameter value is clearly specified in a standard), or a related parameter or value is written into the terminal device in advance. This is not limited in this application. Further, these values and parameters may be changed or updated.

In a possible implementation, the terminal device receives information/signaling sent by at least one network device. The information/signaling includes the first configuration information, the second configuration information, and the third configuration information. Alternatively, the information/signaling indicates the first configuration information, the second configuration information, and the third configuration information.

Optionally, the first configuration information, the second configuration information, and the third configuration information are carried in at least one of the following: RRC signaling, DCI, a MAC CE, and the like.

In another possible implementation, the first configuration information, the second configuration information, and the third configuration information are preconfigured in the terminal device.

In this embodiment of this application, the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources. The first codebook mode is not related to the second codebook mode. It may also be understood as that one codebook mode codebookMode is configured for each TRP. The first codebook mode is related to one network device, and the second codebook mode is related to another network device.

Optionally, the second configuration information is configured by a first network device for the terminal device, and the third configuration information is configured by a second network device for the terminal device.

Two TPRs are used as an example. The terminal device may randomly configure Mode1 or Mode2 when performing single-TRP CSI measurement for a TRP 1, and the terminal device may randomly configure Mode1 or Mode2 when performing single-TRP CSI measurement for a TRP 2. There is no constraint between the two modes. That is, the first codebook mode is not related to the second codebook mode. It is assumed that Mode1 is configured for the TRP 1, and Mode2 is configured for the TRP 2. The terminal device uses Mode1 when performing the single-TRP CSI measurement for the TRP 1, and uses Mode2 when performing the single-TRP CSI measurement for the TRP 2. If the method is further applicable to an NCJT measurement scenario, when NCJT CSI measurement is performed for the TRP 1 and the TRP 2, Mode1 is used for the TRP 1, and Mode2 is used for the TRP 2.

Optionally, the first configuration information is NZP-CSI-RS-ResourceSet. The channel measurement resource set is Resource Groups, the first group of channel measurement resources is Group 1, and the second group of channel measurement resources is Group 2. The second configuration information and the third configuration information are two codebook modes codebookMode in codebookConfig.

The channel measurement resource set includes $K_s$ channel measurement resources, the first group of channel measurement resources includes $K_1$ channel measurement resources, and the second group of channel measurement resources includes $K_2$ channel measurement resources, where $K_1 \geq 1$ and $K_2 \geq 1$. Usually, a part of channel measurement resources in the channel measurement resource set is the first group of channel measurement resources, and the other part of the channel measurement resources in the channel measurement resource set is the second group of channel measurement resources. That is, $K_s = K_1 + K_2$. It may also be understood as that the channel measurement resource set is a union set of the first group of channel measurement resources and the second group of channel measurement resources.

**In** addition, that the first group of channel measurement resources is related to the first codebook mode may be reflected in that the terminal device determines, by using the first group of channel measurement resources and the first codebook mode, first sub-CSI to be sent to the first network device. That the second group of channel measurement resources is related to the second codebook mode may be reflected in that the terminal device determines, by using the second group of channel measurement resources and the second codebook mode, second sub-CSI to be sent to the second network device.

To reduce redundancy, the first group of channel measurement resources and the second group of channel measurement resources usually do not have a same channel measurement resource. **In** other words, the first group of channel measurement resources is different from the second group of channel measurement resources. The first group of channel measurement resources is associated with the first network device, and the second group of channel measurement resources is associated with the second network device.

It should be noted that an obtaining mechanism for obtaining the first configuration information, the second configuration information, and the third configuration information by the terminal device in step 601 is not limited in this embodiment, and the foregoing implementation is merely used as an implementation example for description.

Step 602: Send channel state information CSI to at least one network device.

After obtaining the first configuration information, the second configuration information, and the third configuration information, the terminal device may send the CSI to the at least one network device. The CSI is related to the first configuration information, the second configuration information, and the third configuration information. Correspondingly, the at least one network device receives the CSI sent by the terminal device.

Specifically, the terminal device determines the CSI based on the first configuration information, the second configuration information, and the third configuration information, and sends the CSI to the at least one network device.

**In** this embodiment, the CSI includes at least one of the first sub-CSI and the second sub-CSI. The first sub-CSI is related to the first group of channel measurement resources and the first codebook mode. The second sub-CSI is related to the second group of channel measurement resources and the second codebook mode. A quantity of pieces of sub-CSI is related to a reporting mode and X that are configured by the network device for the terminal device. For descriptions of the reporting mode and X, refer to the descriptions in the embodiment shown in FIG. 3. Details are not described herein again.

For example, X=2. After obtaining the first sub-CSI and the second sub-CSI, the terminal device sends the first sub-CSI to the first network device, and sends the second sub-CSI to the second network device.

It should be noted that a manner in which the terminal device obtains configuration information (that is, the first configuration information, the second configuration information, and the third configuration information) is receiving the message/signaling sent by the network device. **In** this case, the network device in this step may be a network device that sends the configuration information, or may be another network device. This is not specifically limited herein.

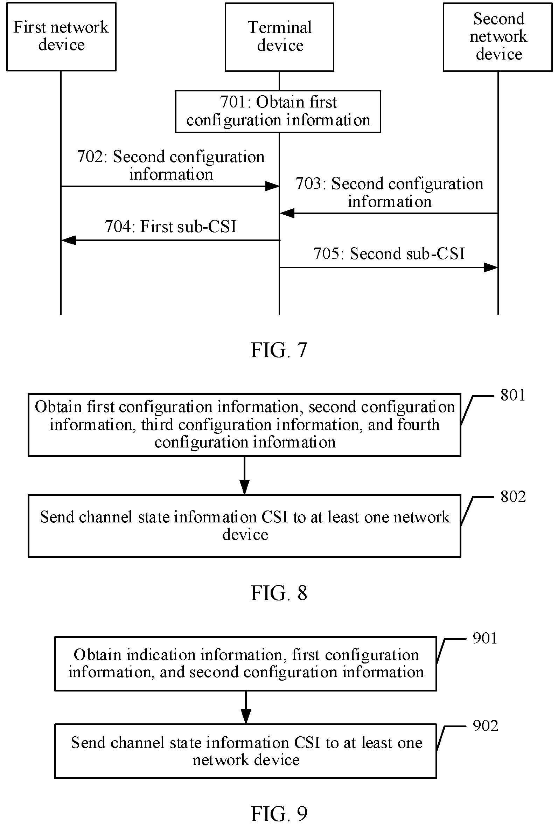

For example, X=2, and a network device is a network device that sends configuration information. A procedure in this embodiment may be shown in FIG. 7. The procedure includes step 701 to step 705.

Step 701: A terminal device obtains first configuration information.

A manner in which the terminal device obtains the first configuration information is similar to the manner of obtaining the configuration information in step 601. Details are not described herein again.

Step 702: A first network device sends second configuration information to the terminal device. Correspondingly, the terminal device receives the second configuration information sent by the first network device.

Step 703: A second network device sends third configuration information to the terminal device. Correspondingly, the terminal device receives the third configuration information sent by the second network device.

Step 704: The terminal device sends first sub-CSI to the first network device. Correspondingly, the first network device receives the first sub-CSI sent by the terminal device.

Step 705: The terminal device sends second sub-CSI to the second network device. Correspondingly, the second network device receives the second sub-CSI sent by the terminal device.

It may be understood that there is no time sequence limitation on the steps in the procedure shown in FIG. 7. For example, step 703 may be performed before step 702. For another example, step 704 may be performed before step 703. For another example, step 705 may be performed before step 704.

For descriptions of single-TRP measurement in step 704 and step 705, refer to the descriptions of the single-TRP measurement in the foregoing related terms. Details are not described herein again.

In this embodiment, codebook modes configured for different network devices are not related. To be specific, one codebook mode is configured for each network device, and different codebook modes are not related to each other and have no constraint between each other. Therefore, flexibility of configuring the codebook mode can be improved.

FIG. 8 is another schematic flowchart of a communication method according to an embodiment of this application. The method may be performed by a terminal device. Alternatively, the method may be performed by a component (for example, a processor, a chip, or a chip system) of the terminal device. Certainly, the method may alternatively be performed by a communication system including the terminal device and a network device. The method may be applied to a single-TRP measurement scenario and/or an NCJT measurement scenario. The method may include step 801 and step 802. The following describes step 801 and step 802 in detail.

Step 801: Obtain first configuration information, second configuration information, third configuration information, and fourth configuration information.

The terminal device may obtain the first configuration information, the second configuration information, the third configuration information, and the fourth configuration information through configuration/preconfiguration. The configuration means that a network device like a base station or a server sends configuration information of some parameters or values of the parameters to the terminal device via a message or signaling, so that the terminal device determines a communication parameter or a transmission resource based on the values or the information. The preconfiguration is similar to the configuration. The preconfiguration may be a manner in which the network device like the base station or the server sends parameter information or the values to the terminal device over a communication link or on a carrier, or may be a manner in which a corresponding parameter or parameter value is defined (for example, the parameter value is clearly specified in a standard), or a related parameter or value is written into the terminal device in advance. This is not limited in this application. Further, these values and parameters may be changed or updated.

In a possible implementation, the terminal device receives information/signaling sent by at least one network device. The information/signaling includes the first configuration information, the second configuration information, the third configuration information, and the fourth configuration information. Alternatively, the information/signaling indicates the first configuration information, the second configuration information, the third configuration information, and the fourth configuration information.

Optionally, the first configuration information, the second configuration information, the third configuration information, and the fourth configuration information are carried in at least one of the following: RRC signaling, DCI, a MAC CE, and the like. For example, codebook modes codebookMode (that is, a first codebook mode and a second codebook mode) for a single TRP and a codebook mode codebookMode (a third codebook mode) for NCJT are separately configured by using three RRC parameters.

In another possible implementation, the first configuration information, the second configuration information, the third configuration information, and the fourth configuration information are preconfigured in the terminal device.

In this embodiment of this application, the first configuration information is used to configure a channel measurement set (a first group of channel measurement resources and a second group of channel measurement resources), the second configuration information is used to configure a first codebook mode related to a fourth group of channel measurement resources, and the third configuration information is used to configure a second codebook mode related to a fifth group of channel measurement resources. The fourth configuration information is used to configure a third codebook mode related to a third group of channel measurement resources. The first codebook mode, the second codebook mode, and the third codebook mode are not related to each other. It may also be understood as that one codebook mode codebookMode is configured for each TRP. The first codebook mode is related to a first network device, and the second codebook mode is related to a second network device. In addition, in the NCJT measurement scenario, a codebook mode (namely, the third codebook mode) is configured for the NCJT measurement, and the third codebook mode is related to the first network device and the second network device.

The third group of channel measurement resources, the fourth group of channel measurement resources, and the fifth group of channel measurement resources are equivalently extracted, picked, or selected from the first group of channel measurement resources and the second group of channel measurement resources. Therefore, configuration information of the third group of channel measurement resources, the fourth group of channel measurement resources, and the fifth group of channel measurement resources may be from corresponding configuration information of channel measurement resources extracted from the first group of channel measurement resources and the second group of channel measurement resources.

Optionally, the second configuration information is configured by the first network device for the terminal device, and the third configuration information is configured by the second network device for the terminal device. The fourth configuration information is configured by the first network device or the second network device for the terminal device.

Two TPRs are used as an example. The terminal device may randomly configure Mode1 or Mode2 when performing single-TRP CSI measurement for a TRP 1, and the terminal device may randomly configure Mode1 or Mode2 when performing single-TRP CSI measurement for a TRP 2. There is no constraint between the two modes. That is, the first codebook mode is not related to the second codebook mode. It is assumed that Mode1 is configured for the TRP 1, and Mode2 is configured for the TRP 2. The terminal device uses Mode1 when performing the single-TRP CSI measurement for the TRP 1, and uses Mode2 when performing the single-TRP CSI measurement for the TRP 2. In addition, when the NCJT measurement is performed, codebookMode (namely, the third codebook mode) for the NCJT measurement is decoupled from codebookMode for the single-TRP measurement. Further, when the NCJT CSI measurement is performed, the TRP 1 and the TRP 2 have a same mode. Therefore, the UE needs to generate candidate sets of different PMIs only in one mode, and time complexity and space complexity are low.

Optionally, the first configuration information is NZP-CSI-RS-ResourceSet. The channel measurement resource set is Resource Groups, the first group of channel measurement resources is Group 1, and the second group of channel measurement resources is Group 2. The second configuration information, the third configuration information, and the fourth configuration information are three codebook modes codebookMode in codebookConfig.

The channel measurement resource set includes $K_s$ channel measurement resources, the first group of channel measurement resources includes $K_1$ channel measurement resources, and the second group of channel measurement resources includes $K_2$ channel measurement resources, where $K_1 \geq 1$ and $K_2 \geq 1$. Usually, a part of channel measurement resources in the channel measurement resource set is the first group of channel measurement resources, and the other part of the channel measurement resources in the channel measurement resource set is the second group of channel measurement resources. That is, $K_s = K_1 + K_2$. It may also be understood as that the channel measurement resource set is a union set of the first group of channel measurement resources and the second group of channel measurement resources.

To reduce redundancy, the first group of channel measurement resources and the second group of channel measurement resources usually do not have a same channel measurement resource. In other words, the first group of channel measurement resources is different from the second group of channel measurement resources.

If the communication method is applied to the NCJT scenario, the channel measurement resource set may further include the third group of channel measurement resources, the fourth group of channel measurement resources, and the fifth group of channel measurement resources. The fourth group of channel measurement resources is associated with the first network device, and the fifth group of channel measurement resources is associated with the second network device. The third group of channel measurement resources is associated with the first network device and the second network device. In this case, it may be understood as that the single-TRP measurement and the NCJT measurement are configured by using three codebook modes. In addition, when the terminal device performs the NCJT CSI measurement, codebook modes of different TRPs are the same. Descriptions of the third group of channel measurement resources, the fourth group of channel measurement resources, and the fifth group of channel measurement resources are similar to those described in the embodiment shown in FIG. 3. Details are not described herein again.

In addition, that the fourth group of channel measurement resources is related to the first codebook mode may be reflected in that the terminal device determines first sub-CSI by using the fourth group of channel measurement resources and the first codebook mode. That the fifth group of channel measurement resources is related to the second codebook mode may be reflected in that the terminal device determines second sub-CSI by using the fifth group of channel measurement resources and the second codebook mode. That the third group of channel measurement resources is related to the third codebook mode may be reflected in that the terminal device determines third sub-CSI by using the third group of channel measurement resources and the third codebook mode.

It should be noted that an obtaining mechanism for obtaining the first configuration information, the second configuration information, the third configuration information, and the fourth configuration information by the terminal device in step 601 is not limited in this embodiment, and the foregoing implementation is merely used as an implementation example for description.

Step 802: Send channel state information CSI to at least one network device.

After obtaining the first configuration information, the second configuration information, the third configuration information, and the fourth configuration information, the terminal device may send the CSI to the at least one network device. The CSI is related to the first configuration information, the second configuration information, the third configuration information, and the fourth configuration information. Correspondingly, the at least one network device receives the CSI sent by the terminal device.

Specifically, the terminal device determines the CSI based on the first configuration information, the second configuration information, the third configuration information, and the fourth configuration information, and sends the CSI to the at least one network device.

It should be noted that a manner in which the terminal device obtains configuration information (that is, the first configuration information, the second configuration information, the third configuration information, and the fourth configuration information) is receiving the message/signaling sent by the network device. In this case, the network device in this step may be a network device that sends the configuration information (that is, the network device sends the configuration information to the terminal device and receives the CSI from the terminal device), or may be another network device. This is not specifically limited herein.

In the single-TRP measurement scenario and the NCJT measurement scenario, the CSI includes at least one of the first sub-CSI, the second sub-CSI, and the third sub-CSI. The first sub-CSI is related to the fourth group of channel measurement resources and the first codebook mode. The second sub-CSI is related to the fifth group of channel measurement resources and the second codebook mode. The third sub-CSI is related to the third group of channel measurement resources and the third codebook mode. A quantity of pieces of sub-CSI is related to a reporting mode and X configured by the network device for the terminal device. For descriptions of the reporting mode and X, refer to the descriptions in the embodiment shown in FIG. 3. Details are not described herein again.

For descriptions of the single-TRP measurement and the NCJT measurement, refer to the descriptions in the foregoing related terms and the embodiment shown in FIG. 3. Details are not described herein again.

For example, codebookMode for the single-TRP CSI measurement is configured for each TRP: codebookMode-group1 (namely, the first codebook mode) and codebookMode-group2 (namely, the second codebook mode). It is assumed that codebookMode-group1 indicates Mode1, and codebookMode-group2 indicates Mode2. The terminal device uses Mode1 when performing the single-TRP CSI measurement for the TRP 1, and uses Mode2 when performing the single-TRP CSI measurement for the TRP 2. In addition, the base station configures codebookMode-NCJT (namely, the third codebook mode) for the terminal device, so that the terminal device performs the NCJT CSI measurement for the TRP 1 and the TRP 2. It is assumed that codebookMode-NCJT indicates Mode1. In this case, when the terminal device performs the NCJT CSI measurement for the TRP 1 and the TRP 2, both the two TRPs use Mode1.

In this embodiment, codebook modes configured for different network devices are not related. To be specific, one codebook mode is configured for each network device, and different codebook modes are not related to each other and have no constraint between each other. In addition, in the single-TRP measurement scenario and the NCJT measurement scenario, codebook modes needed for the single-TRP measurement and the NCJT measurement are separately configured by using three codebook modes codebookMode in codebookConfig, and the codebook mode for the NCJT measurement is decoupled from the codebook mode for the single-TRP measurement. Therefore, flexibility of configuring the codebook mode can be improved.

FIG. 9 is another schematic flowchart of a communication method according to an embodiment of this application. The method may be performed by a terminal device. Alternatively, the method may be performed by a component (for example, a processor, a chip, or a chip system) of the terminal device. Certainly, the method may alternatively be performed by a communication system including the terminal device and a network device. The method may be applied to a single-TRP measurement scenario and/or a CJT measurement scenario. The method may include step 901 and step 902. The following describes step 901 and step 902 in detail.

Step 901: Obtain indication information, first configuration information, and second configuration information.

The terminal device may obtain the indication information, the first configuration information, and the second configuration information through configuration/preconfiguration. The configuration means that a network device like a base station or a server sends configuration information of some parameters or values of the parameters to the terminal device via a message or signaling, so that the terminal device determines a communication parameter or a transmission resource based on the values or the information. The preconfiguration is similar to the configuration. The preconfiguration may be a manner in which the network device like the base station or the server sends parameter information or the values to the terminal device over a communication link or on a carrier, or may be a manner in which a corresponding parameter or parameter value is defined (for example, the parameter value is clearly specified in a standard), or a related parameter or value is written into the terminal device in advance. This is not limited in this application. Further, these values and parameters may be changed or updated.

In a possible implementation, the terminal device receives information/signaling sent by at least one network device. The information/signaling includes the indication information, the first configuration information, and the second configuration information. Alternatively, the information/signaling indicates the indication information, the first configuration information, and the second configuration information.

Optionally, the indication information, the first configuration information, and the second configuration information are carried in at least one of the following: RRC signaling, DCI, a MAC CE, and the like.

In another possible implementation, the indication information, the first configuration information, and the second configuration information are preconfigured in the terminal device.

In this embodiment of this application, the indication information indicates that a codebook used for channel measurement is a first codebook or a second codebook, the first configuration information is used to configure a parameter of the first codebook, and the second configuration information is used to configure a parameter of the second codebook.

Optionally, the parameter of the first codebook may include at least one of the following: a first codebook subset restriction, a codebook mode, and the like. The parameter of the second codebook includes a second codebook subset restriction and the like. The first codebook subset restriction may be understood as a PMI restriction corresponding to the first codebook, and the second codebook subset restriction may be understood as a PMI restriction corresponding to the second codebook.

Further, a quantity of first codebook subset restrictions may be consistent with a quantity of network devices, and there is one codebook mode. Alternatively, it is understood as that different network devices use a same codebook mode, to reduce configurations of a plurality of codebook modes.

For example, the at least one network device includes four TRPs. A shared codebook parameter of all TRPs may be configured by using the parameter of the first codebook. For example, the parameter of the first codebook includes: type2-CJT-TRP0, type2-CJT-TRP 1, type2-CJT-TRP 2, and type2-CJT-TRP3.

Optionally, the first codebook is a CJT codebook, and the second codebook is a medium- and high-speed codebook. In this case, the CJT codebook and the medium- and high-speed codebook are configured in parallel, for example, configured by using type2-CJT and type2-medium-and-high-speed. In addition, indication information indicates whether the CJT codebook or the medium- and high-speed codebook is used.

For example, the indication information is 1 bit (bit), "0" indicates that the CJT codebook is used, and "1" indicates that the medium- and high-speed codebook is used. Alternatively, "1" indicates that the CJT codebook is used, and "0" indicates that the medium- and high-speed codebook is used. It may be understood that the indication information may alternatively provide an indication by using more bits. This is not specifically limited herein.

In addition, when a quantity of the at least one network device is 1, the codebook mode may be a preset codebook mode (for example, a mode 1 or a mode 2). In this case, the parameter of the first codebook includes the first codebook subset restriction, and does not include the codebook mode. In other words, a codebook mode field is optional, and the codebook mode may not be configured.

Optionally, to improve a plurality of versions to which the first codebook is applicable, the first codebook includes a first sub-codebook and a second sub-codebook. In this case, the parameter of the first codebook includes: a first sub-codebook subset restriction, a codebook mode of the first sub-codebook, a second sub-codebook subset restriction, and a codebook mode of the second sub-codebook.

For example, the first codebook is the CJT codebook. To improve a plurality of versions to which the CJT codebook is applicable, a type2-CJT codebook may be further subdivided into a Rel-16 Type2 CJT codebook and a Rel-17 Type2-based CJT codebook. In this case, the parameter of the first codebook includes a PMI restriction of the Rel-16 Type2 CJT codebook, a codebook mode of the Rel-16 Type2 CJT codebook, a PMI restriction of the Rel-17 Type2 CJT codebook, and a codebook mode of the Rel-17 Type2 CJT codebook.

Step 902: Send channel state information CSI to the at least one network device.

After obtaining the indication information, the first configuration information, and the second configuration information, the terminal device may send the CSI to the at least one network device. The CSI is related to the indication information, the first configuration information, and the second configuration information. Correspondingly, the at least one network device receives the CSI sent by the terminal device.

Specifically, the terminal device determines the CSI based on the indication information, the first configuration information, and the second configuration information, and sends the CSI to the at least one network device.

It should be noted that a manner in which the terminal device obtains the indication information, the first configuration information, and the second configuration information is receiving the message/signaling sent by the network device. In this case, the network device in this step may be a network device that sends the indication information, the first configuration information, and the second configuration information (that is, the network device sends the indication information, the first configuration information, and the second configuration information to the terminal device and receives the CSI from the terminal device), or may be another network device. This is not specifically limited herein.

For descriptions of the single-TRP measurement and the CJT measurement, refer to the descriptions in the foregoing related terms. Details are not described herein again.

In this embodiment, the first codebook and the second codebook are configured in parallel, and the to-be-used codebook is indicated by the indication information. In addition, different network devices use a same codebook mode, to reduce configurations of a plurality of codebook modes. In addition, when the quantity of the at least one network device is 1, the preset codebook mode may be used, to reduce resources occupied for configuring the codebook mode.

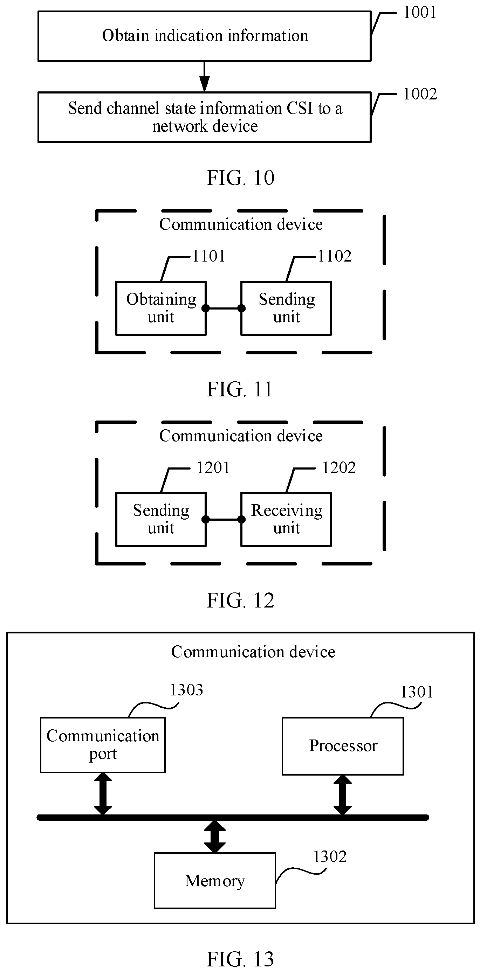

FIG. 10 is another schematic flowchart of a communication method according to an embodiment of this application. The method may be performed by a terminal device. Alternatively, the method may be performed by a component (for example, a processor, a chip, or a chip system) of the terminal device. Certainly, the method may alternatively be performed by a communication system including the terminal device and a network device. The method may be applied to a single-TRP measurement scenario and/or a CJT measurement scenario. The method may include step 1001 and step 1002. The following describes step 1001 and step 1002 in detail.

Step 1001: Obtain indication information.

The terminal device may obtain the indication information through configuration/preconfiguration. The configuration means that a network device like a base station or a server sends configuration information of some parameters or values of the parameters to the terminal device via a message or signaling, so that the terminal device determines a communication parameter or a transmission resource based on the values or the information. The preconfiguration is similar to the configuration. The preconfiguration may be a manner in which the network device like the base station or the server sends parameter information or the values to the terminal device over a communication link or on a carrier, or may be a manner in which a corresponding parameter or parameter value is defined (for example, the parameter value is clearly specified in a standard), or a related parameter or value is written into the terminal device in advance. This is not limited in this application. Further, these values and parameters may be changed or updated.

In a possible implementation, the terminal device receives information/signaling sent by at least one network device. The information/signaling includes the indication information. Alternatively, the information/signaling indicates the indication information.

Optionally, the indication information is carried in at least one of the following: RRC signaling, DCI, a MAC CE, and the like.

In another possible implementation, the indication information is preconfigured in the terminal device.

The indication information in this embodiment of this application is used by a network device to configure, for the terminal device, a preset mode of a first codebook or a second codebook for channel measurement. The preset codebook mode is a mode 1 or a mode 2.

Optionally, the first codebook is a CJT codebook, and the second codebook is a medium- and high-speed codebook. The indication information indicates whether the preset mode of the CJT codebook or the medium- and high-speed codebook is used.

In other words, when there is one network device, the mode 1 is the same as the mode 2. In this solution, the CJT codebook is combined with the medium- and high-speed codebook, and codebookMode (which may be understood as the indication information) indicates Mode1 and Mode2, and also indicates the medium- and high-speed codebook. That is, 1 bit of codebookMode indicates {Mode1, medium and high speed}.

For example, when there is one network device, the indication information is a codebook mode (codebookMode).

When there are a plurality of network devices, 1 bit of codebookMode indicates {Mode1, Mode2}. For this case, refer to the related descriptions in FIG. 9. Details are not described herein again.

For example, the network device is a TRP. When TRP=1, the CJT codebook has only one codebook mode (namely, the indication information). The codebook mode indicates whether the preset mode of the first codebook or the medium- and high-speed codebook is used. When TRP=2, the codebook mode indicates a first mode and a second mode of the CJT.

Optionally, the terminal device may further obtain a PMI restriction of the codebook. In this case, it may be understood that the indication information and the PMI restriction belong to a codebook configuration (codebookConfig).

Optionally, to improve a plurality of versions to which the first codebook is applicable, the first codebook includes a first sub-codebook and a second sub-codebook. In this case, a quantity of pieces of indication information is consistent with a quantity of the plurality of versions. That is, the indication information includes first indication information and second indication information. The first indication information is used by a network device to configure, for the terminal device, a preset mode of the first sub-codebook or the second codebook for channel measurement. The second indication information is used by a network device to configure, for the terminal device, a preset mode of the second sub-codebook or the second codebook for channel measurement.

For example, the first codebook is the CJT codebook. To improve a plurality of versions to which the CJT codebook is applicable, a type2-CJT codebook may be further subdivided into a Rel-16 Type2 CJT codebook and a Rel-17 Type2-based CJT codebook. In this case, the first indication information indicates a preset mode of the Rel-16 Type2 CJT codebook or the medium- and high-speed codebook. The second indication information indicates a preset mode of the Rel-17 Type2 CJT codebook or the medium- and high-speed codebook.

Step 1002: Send channel state information CSI to the network device.

After obtaining the indication information, the terminal device may send the CSI to the at least one network device. The CSI is related to the indication information. Correspondingly, the at least one network device receives the CSI sent by the terminal device.

Specifically, the terminal device determines the CSI based on the indication information, and sends the CSI to the at least one network device.

It should be noted that a manner in which the terminal device obtains the indication information is receiving the message/signaling sent by the network device. In this case, the network device in this step may be a network device that sends the indication information (that is, the network device sends the indication information to the terminal device and receives the CSI from the terminal device), or may be another network device. This is not specifically limited herein.

For descriptions of the single-TRP measurement and the CJT measurement, refer to the descriptions in the foregoing related terms. Details are not described herein again.

In this embodiment, the first codebook and the second codebook are configured in parallel, and the to-be-used codebook is indicated by the indication information. In addition, when a quantity of the at least one network device is 1, the indication information may indicate whether to use the preset mode of the first codebook or the second codebook. In comparison with the solution in the embodiment shown in FIG. 9, overheads of the indication information indicating the first codebook or the second codebook are reduced.

The foregoing describes the communication method provided in embodiments of this application, and the following describes a communication device in the method.

FIG. 11 is an implementation diagram of a communication device according to an embodiment of this application. The communication device may specifically perform an implementation process related to the terminal device in any one of the foregoing embodiments.

As shown in FIG. 11, the communication device includes an obtaining unit 1101 and a sending unit 1102. For different embodiments, implementations of the units are different, and are separately described below.

In a first implementation, when the communication device is configured to implement the implementation processes related to the terminal device in the embodiments shown in FIG. 3 to FIG. 5, the obtaining unit 1101 and the sending unit 1102 in the communication device are specifically configured to perform the following implementation processes.

The obtaining unit 1101 is configured to obtain first configuration information and second configuration information. The first configuration information is used to configure a channel measurement resource set. The second configuration information is used to configure one codebook mode related to the channel measurement resource set. The channel measurement resource set includes a first group of channel measurement resources and a second group of channel measurement resources.

The sending unit 1102 is configured to send channel state information CSI to a network device. The CSI is related to the first configuration information and the second configuration information.

Optionally, a part of channel measurement resources in the channel measurement resource set is the first group of channel measurement resources, and the other part of the channel measurement resources in the channel measurement resource set is the second group of channel measurement resources.

Optionally, the CSI includes at least one of first sub-CSI, second sub-CSI, and third sub-CSI. The first sub-CSI is related to a fourth group of channel measurement resources and the codebook mode. The fourth group of channel measurement resources is the first group of channel measurement resources, or the fourth group of channel measurement resources is a channel measurement resource other than a first same channel measurement resource in the first group of channel measurement resources. The first same channel measurement resource is a same channel measurement resource in the first group of channel measurement resources and in a third group of channel measurement resources. The third group of channel measurement resources includes N resource pairs. Each of the N resource pairs includes at least one channel measurement resource in the first group of channel measurement resources and at least one channel measurement resource in the second group of channel measurement resources, and N is a positive integer. The second sub-CSI is related to a fifth group of channel measurement resources and the codebook mode. The fifth group of channel measurement resources is the second group of channel measurement resources, or the fifth group of channel measurement resources is a channel measurement resource other than a second same channel measurement resource in the second group of channel measurement resources. The second same channel measurement resource is a same channel measurement resource in the second group of channel measurement resources and in the third group of channel measurement resources. The third sub-CSI is related to the third group of channel measurement resources and the codebook mode. The third group of channel measurement resources includes N resource pairs. Each of the N resource pairs includes at least one channel measurement resource in the first group of channel measurement resources and at least one channel measurement resource in the second group of channel measurement resources.

Optionally, the first configuration information and the second configuration information are carried in at least one of the following: radio resource control RRC signaling, downlink control information DCI, and medium access control MAC.

In this embodiment, operations performed by the units in the communication device are similar to those described in the embodiments shown in FIG. 3 to FIG. 5. Details are not described herein again.

In a second implementation, when the communication device is configured to implement the implementation processes related to the terminal device in the embodiments shown in FIG. 6 and FIG. 7, the obtaining unit 1101 and the sending unit 1102 in the communication device are specifically configured to perform the following implementation processes.

The obtaining unit 1101 is configured to obtain first configuration information, second configuration information, and third configuration information. The first configuration information is used to configure a first group of channel measurement resources and a second group of channel measurement resources. The second configuration information is used to configure a first codebook mode related to the first group of channel measurement resources. The third configuration information is used to configure a second codebook mode related to the second group of channel measurement resources.

The sending unit 1102 is configured to send channel state information CSI to at least one network device. The CSI is related to the first configuration information, the second configuration information, and the third configuration information.

Optionally, a part of channel measurement resources in a channel measurement resource set is the first group of channel measurement resources, and the other part of the channel measurement resources in the channel measurement resource set is the second group of channel measurement resources.

Optionally, the CSI includes at least one of first sub-CSI and second sub-CSI. The first sub-CSI is related to the first group of channel measurement resources and the first codebook mode. The second sub-CSI is related to the second group of channel measurement resources and the second codebook mode.

In this embodiment, operations performed by the units in the communication device are similar to those described in the embodiments shown in FIG. 6 and FIG. 7. Details are not described herein again.

In a third implementation, when the communication device is configured to implement the implementation processes related to the terminal device in the embodiment shown in FIG. 8, the obtaining unit 1101 and the sending unit 1102 in the communication device are specifically configured to perform the following implementation processes.

The obtaining unit 1101 is configured to obtain first configuration information, second configuration information, third configuration information, and fourth configuration information. The first configuration information is used to configure a first group of channel measurement resources and a second group of channel measurement resources.

The second configuration information is used to configure a first codebook mode related to a fourth group of channel measurement resources. The fourth group of channel measurement resources is the first group of channel measurement resources, or the fourth group of channel measurement resources is a channel measurement resource other than a first same channel measurement resource in the first group of channel measurement resources. The first same channel measurement resource is a same channel measurement resource in the first group of channel measurement resources and in a third group of channel measurement resources. The third group of channel measurement resources includes N resource pairs. Each of the N resource pairs includes at least one channel measurement resource in the first group of channel measurement resources and at least one channel measurement resource in the second group of channel measurement resources.

The third configuration information is used to configure a second codebook mode related to a fifth group of channel measurement resources. The fifth group of channel measurement resources is the second group of channel measurement resources, or the fifth group of channel measurement resources is a channel measurement resource other than a second same channel measurement resource in the second group of channel measurement resources. The second same channel measurement resource is a same channel measurement resource in the second group of channel measurement resources and in the third group of channel measurement resources.

The fourth configuration information is used to configure a third codebook mode related to the third group of channel measurement resources.

The sending unit 1102 is configured to send channel state information CSI to at least one network device. The CSI is related to the first configuration information, the second configuration information, the third configuration information, and the fourth configuration information.

Optionally, a part of channel measurement resources in a channel measurement resource set is the first group of channel measurement resources, and the other part of the channel measurement resources in the channel measurement resource set is the second group of channel measurement resources.

Optionally, the CSI includes at least one of first sub-CSI, second sub-CSI, and third sub-CSI. The first sub-CSI is related to the fourth group of channel measurement resources and the first codebook mode. The second sub-CSI is related to the fifth group of channel measurement resources and the second codebook mode. The third sub-CSI is related to the third group of channel measurement resources and the third codebook mode.

In this embodiment, operations performed by the units in the communication device are similar to those described in the embodiment shown in FIG. 8. Details are not described herein again.

In a fourth implementation, when the communication device is configured to implement the implementation processes related to the terminal device in the embodiment shown in FIG. 9, the obtaining unit 1101 and the sending unit 1102 in the communication device are specifically configured to perform the following implementation processes.

The obtaining unit 1101 is configured to obtain indication information, first configuration information, and second configuration information. The indication information indicates that a codebook used for channel measurement is a first codebook or a second codebook, the first configuration information is used to configure a parameter of the first codebook, and the second configuration information is used to configure a parameter of the second codebook.

The sending unit 1102 is configured to send channel state information CSI to at least one network device. The CSI is related to the indication information, the first configuration information, and the second configuration information.

Optionally, the parameter of the first codebook includes at least one of the following: a first codebook subset restriction and a codebook mode. The parameter of the second codebook includes a second codebook subset restriction.

Optionally, a quantity of the at least one network device is 1, the codebook mode is a preset codebook mode, the preset codebook mode is a mode 1 or a mode 2, and the parameter of the first codebook includes the first codebook subset restriction and does not include the codebook mode.

In this embodiment, operations performed by the units in the communication device are similar to those described in the embodiment shown in FIG. 9. Details are not described herein again.

In a fifth implementation, when the communication device is configured to implement the implementation processes related to the terminal device in the embodiment shown in FIG. 10, the obtaining unit 1101 and the sending unit 1102 in the communication device are specifically configured to perform the following implementation processes.

The obtaining unit 1101 is configured to obtain indication information. The indication information is used by a network device to configure a preset mode of a first codebook or a second codebook for channel measurement. The preset codebook mode is a mode 1 or a mode 2.

The sending unit 1102 is configured to send channel state information CSI to a network device. The CSI is related to the indication information.

In this embodiment, operations performed by the units in the communication device are similar to those described in the embodiment shown in FIG. 10. Details are not described herein again.

FIG. 12 is an implementation diagram of another communication device according to an embodiment of this application. The communication device may specifically perform an implementation process related to the network device in any one of the foregoing embodiments.

As shown in FIG. 12, the communication device includes a sending unit 1201 and a receiving unit 1202. For different embodiments, implementations of the units are different, and are separately described below.

In a first implementation, when the communication device is configured to implement the implementation processes related to the terminal device in the embodiments shown in FIG. 3 to FIG. 5, the sending unit 1201 and the receiving unit 1202 in the communication device are specifically configured to perform the following implementation processes.

The sending unit 1201 is configured to send first configuration information and second configuration information to a terminal device. The first configuration information is used to configure a channel measurement resource set. The second configuration information is used to configure one codebook mode related to the channel measurement resource set. The channel measurement resource set includes a first group of channel measurement resources and a second group of channel measurement resources.

The receiving unit 1202 is configured to receive channel state information CSI from the terminal device. The CSI is related to the first configuration information and the second configuration information.

In this embodiment, operations performed by the units in the communication device are similar to those described in the embodiments shown in FIG. 3 to FIG. 5. Details are not described herein again.

In a second implementation, when the communication device is configured to implement the implementation processes related to the terminal device in the embodiments shown in FIG. 6 and FIG. 7, the sending unit 1201 and the receiving unit 1202 in the communication device are specifically configured to perform the following implementation processes.

The sending unit 1201 is configured to send first configuration information, second configuration information, and third configuration information to a terminal device. The first configuration information is used to configure a first group of channel measurement resources and a second group of channel measurement resources. The second configuration information is used to configure a first codebook mode related to the first group of channel measurement resources. The third configuration information is used to configure a second codebook mode related to the second group of channel measurement resources.

The receiving unit 1202 is configured to receive channel state information CSI from the terminal device. The CSI is related to the first configuration information, the second configuration information, and the third configuration information.

In this embodiment, operations performed by the units in the communication device are similar to those described in the embodiments shown in FIG. 6 and FIG. 7. Details are not described herein again.

In a third implementation, when the communication device is configured to implement the implementation processes related to the terminal device in the embodiment shown in FIG. 8, the sending unit 1201 and the receiving unit 1202 in the communication device are specifically configured to perform the following implementation processes.

The sending unit 1201 is configured to send first configuration information, second configuration information, third configuration information, and fourth configuration information to a terminal device. The first configuration information is used to configure a first group of channel measurement resources and a second group of channel measurement resources.

The second configuration information is used to configure a first codebook mode related to a fourth group of channel measurement resources. The fourth group of channel measurement resources is the first group of channel measurement resources, or the fourth group of channel measurement resources is a channel measurement resource other than a first same channel measurement resource in the first group of channel measurement resources. The first same channel measurement resource is a same channel measurement resource in the first group of channel measurement resources and in a third group of channel measurement resources. The third group of channel measurement resources includes N resource pairs. Each of the N resource pairs includes at least one channel measurement resource in the first group of channel measurement resources and at least one channel measurement resource in the second group of channel measurement resources.

The third configuration information is used to configure a second codebook mode related to a fifth group of channel measurement resources. The fifth group of channel measurement resources is the second group of channel measurement resources, or the fifth group of channel measurement resources is a channel measurement resource other than a second same channel measurement resource in the second group of channel measurement resources. The second same channel measurement resource is a same channel measurement resource in the second group of channel measurement resources and in the third group of channel measurement resources.

The fourth configuration information is used to configure a third codebook mode related to the third group of channel measurement resources.

The receiving unit 1202 is configured to receive channel state information CSI from the terminal device. The CSI is related to the first configuration information, the second configuration information, the third configuration information, and the fourth configuration information.

In this embodiment, operations performed by the units in the communication device are similar to those described in the embodiment shown in FIG. 8. Details are not described herein again.

In a fourth implementation, when the communication device is configured to implement the implementation processes related to the terminal device in the embodiment shown in FIG. 9, the sending unit 1201 and the receiving unit 1202 in the communication device are specifically configured to perform the following implementation processes.

The sending unit 1201 is configured to send indication information, first configuration information, and second configuration information to a terminal device. The indication information indicates that a codebook used for channel measurement is a first codebook or a second codebook, the first configuration information is used to configure a parameter of the first codebook, and the second configuration information is used to configure a parameter of the second codebook.

The receiving unit 1202 is configured to receive channel state information CSI from the terminal device. The CSI is related to the indication information, the first configuration information, and the second configuration information.

Optionally, the parameter of the first codebook includes at least one of the following: a first codebook subset restriction and a codebook mode. The parameter of the second codebook includes a second codebook subset restriction.

Optionally, a quantity of the at least one network device is 1, the codebook mode is a preset codebook mode, the preset codebook mode is a mode 1 or a mode 2, and the parameter of the first codebook includes the first codebook subset restriction and does not include the codebook mode.

In this embodiment, operations performed by the units in the communication device are similar to those described in the embodiment shown in FIG. 9. Details are not described herein again.

In a fifth implementation, when the communication device is configured to implement the implementation processes related to the terminal device in the embodiment shown in FIG. 10, the sending unit 1201 and the receiving unit 1202 in the communication device are specifically configured to perform the following implementation processes.

The sending unit 1201 is configured to send indication information to a terminal device. The indication information is used by a network device to configure a preset mode of a first codebook or a second codebook for channel measurement. The preset codebook mode is a mode 1 or a mode 2.

The receiving unit 1202 is configured to receive channel state information CSI from the terminal device. The CSI is related to the indication information.

In this embodiment, operations performed by the units in the communication device are similar to those described in the embodiment shown in FIG. 10. Details are not described herein again.

FIG. 13 is a diagram of a structure of another communication device according to this application. The communication device may be specifically the terminal device in the embodiments shown in FIG. 1 to FIG. 10. The communication device may include a processor 1301, a memory 1302, and a communication port 1303. The processor 1301, the memory 1302, and the communication port 1303 are interconnected through a line. The memory 1302 stores program instructions and data.

The memory 1302 stores program instructions and data that are corresponding to the steps performed by the terminal device in the foregoing implementations corresponding to FIG. 1 to FIG. 10.

The processor 1301 is configured to perform the steps performed by the terminal device in any one of the embodiments shown in FIG. 1 to FIG. 10.

The communication port 1303 may be configured to receive and send data, and is configured to perform steps related to obtaining, sending, and receiving in any one of the embodiments shown in FIG. 1 to FIG. 10.

In an implementation, the terminal device may include more or fewer components than those in FIG. 13. This is merely an example for description in this application, and is not limited.

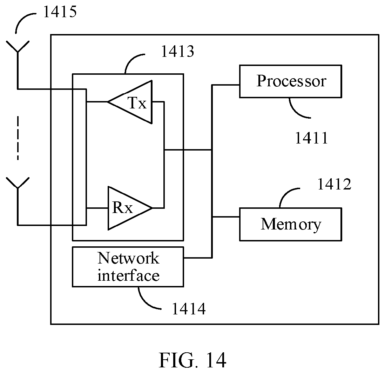

FIG. 14 is a diagram of a structure of the communication device in the foregoing embodiments according to an embodiment of this application. The communication device may be specifically the network device in the embodiments shown in FIG. 1 to FIG. 10. For a structure of the communication device, refer to the structure shown in FIG. 14.

The communication device includes at least one processor 1411 and at least one network interface 1414. Further, optionally, the communication device further includes at least one memory 1412, at least one transceiver 1413, and one or more antennas 1415. The processor 1411, the memory 1412, the transceiver 1413, and the network interface 1414 are connected to each other, for example, through a bus. In this embodiment of this application, the connection may include various types of interfaces, transmission lines, buses, or the like. This is not limited in this embodiment. The antenna 1415 is connected to the transceiver 1413. The network interface 1414 is configured to enable the communication device to communicate with another communication device through a communication link. For example, the network interface 1414 may include a network interface between the communication device and a core network device, for example, an S1 interface. The network interface may include a network interface between the communication device and another communication device (for example, another network device or core network device), for example, an X2 or Xn interface.

The processor 1411 is mainly configured to: process a communication protocol and communication data; control the entire communication device; execute a software program; and process data of the software program. For example, the processor 1411 is configured to support the communication device in performing the actions described in embodiments. The communication device may include a baseband processor and a central processing unit. The baseband processor is mainly configured to process the communication protocol and the communication data. The central processing unit is mainly configured to: control the entire terminal device, execute the software program, and process the data of the software program. The processor 1411 in FIG. 14 may integrate functions of the baseband processor and the central processing unit. A person skilled in the art may understand that the baseband processor and the central processing unit may alternatively be processors independent of each other, and are interconnected by using a technology like a bus. A person skilled in the art may understand that the terminal device may include a plurality of baseband processors to adapt to different network standards, and the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor; or may be stored in the memory in a form of a software program, and the processor executes the software program to implement a baseband processing function.

The memory is mainly configured to store the software program and the data. The memory 1412 may exist independently, and is connected to the processor 1411. Optionally, the memory 1412 may alternatively be integrated with the processor 1411, for example, integrated into one chip. The memory 1412 can store program code for executing the technical solutions in embodiments of this application, and the processor 1411 controls the execution. Various types of executed computer program code may also be considered as drivers of the processor 1411.

FIG. 14 shows only one memory and one processor. An actual terminal device may include a plurality of processors and a plurality of memories. The memory may also be referred to as a storage medium, a storage device, or the like. The memory may be a storage element located on a same chip as the processor, namely, an on-chip storage element, or an independent storage element. This is not limited in this embodiment of this application.

The transceiver 1413 may be configured to support receiving or sending of a radio frequency signal between the communication device and a terminal device, and the transceiver 1413 may be connected to the antenna 1415. The transceiver 1413 includes a transmitter Tx and a receiver Rx. Specifically, the one or more antennas 1415 may receive a radio frequency signal. The receiver Rx in the transceiver 1413 is configured to: receive the radio frequency signal from the antenna, convert the radio frequency signal into a digital baseband signal or a digital intermediate frequency signal, and provide the digital baseband signal or the digital intermediate frequency signal for the processor 1411, so that the processor 1411 further processes the digital baseband signal or the digital intermediate frequency signal, for example, performs demodulation processing and decoding processing. In addition, the transmitter Tx in the transceiver 1413 is further configured to: receive a modulated digital baseband signal or digital intermediate frequency signal from the processor 1411, convert the modulated digital baseband signal or digital intermediate frequency signal into a radio frequency signal, and send the radio frequency signal through the one or more antennas 1415. Specifically, the receiver Rx may selectively perform one-level or multi-level down mixing processing and analog-to-digital conversion processing on the radio frequency signal, to obtain a digital baseband signal or a digital intermediate frequency signal. A sequence of the down mixing processing and the analog-to-digital conversion processing is adjustable. The transmitter Tx may selectively perform one-level or multi-level up mixing processing and digital-to-analog conversion processing on the modulated digital baseband signal or digital intermediate frequency signal, to obtain a radio frequency signal. A sequence of the up mixing processing and the digital-to-analog conversion processing is adjustable. The digital baseband signal and the digital intermediate frequency signal may be collectively referred to as digital signals.

The transceiver may also be referred to as an input/output unit, a transceiver, a transceiver apparatus, or the like. Optionally, a component configured to implement a receiving function in the input/output unit may be considered as a receiving unit, and a component configured to implement a sending function in the input/output unit may be considered as a sending unit. To be specific, the input/output unit includes the receiving unit and the sending unit. The receiving unit may also be referred to as a receiver, an input port, a receiving circuit, or the like. The sending unit may also be referred to as a transmitter machine, a transmitter, a transmitting circuit, or the like.

It should be noted that the communication device shown in FIG. 14 may be specifically configured to implement the steps implemented by the network device in the embodiments shown in FIG. 1 to FIG. 10, and implement technical effects corresponding to the network device. For specific implementations of the communication device shown in FIG. 14, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the foregoing possible implementations of the terminal device.

An embodiment of this application further provides a computer program product storing one or more computers. When the computer program product is executed by a processor, the processor performs the method in the foregoing possible implementations of the network device.

An embodiment of this application further provides a chip system. The chip system includes at least one processor, configured to support a terminal device in implementing the functions of the terminal device in the foregoing possible implementations. Optionally, the chip system further includes an interface circuit. The interface circuit provides program instructions and/or data for the at least one processor. In a possible design, the chip system may further include a memory. The memory is configured to store program instructions and data that are necessary for the terminal device. The chip system may include a chip, or may include the chip and another discrete component.

An embodiment of this application further provides a chip system. The chip system includes at least one processor, configured to support a network device in implementing the functions of the network device in the foregoing possible implementations. Optionally, the chip system further includes an interface circuit. The interface circuit provides program instructions and/or data for the at least one processor. In a possible design, the chip system may further include a memory. The memory is configured to store program instructions and data that are necessary for the network device. The chip system may include a chip, or may include the chip and another discrete component. The network device may be specifically the network device in the foregoing method embodiments.

An embodiment of this application further provides a communication system. The communication system includes the terminal device and the network device in any one of the foregoing embodiments.

In the several embodiments provided in this application, it should be understood that the disclosed systems, apparatuses, and methods may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, the functional units in embodiments of this application may be integrated into one processing unit, each of the units may exist alone physically, or two or more of the units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the existing technology, or all or some of the technical solutions may be implemented in the form of a software product. The computer software product is stored in a storage medium and includes several instructions for instructing a computer device (which may be a personal computer, a server, or a network device) to perform all or some of the steps of the method described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A communication method, wherein the method comprises:

   obtaining first configuration information and second configuration information, wherein the first configuration information is used to configure a channel measurement resource set, the second configuration information is used to configure one codebook mode related to the channel measurement resource set, and the channel measurement resource set comprises a first group of channel measurement resources and a second group of channel measurement resources; and
   sending channel state information CSI to a network device, wherein the CSI is related to the first configuration information and the second configuration information.

2. The method according to claim 1, wherein a part of channel measurement resources in the channel measurement resource set is the first group of channel measurement resources, and the other part of the channel measurement resources in the channel measurement resource set is the second group of channel measurement resources.

3. The method according to claim 1 or 2, wherein the CSI comprises at least one of first sub-CSI, second sub-CSI, and third sub-CSI, wherein

   the first sub-CSI is related to a fourth group of channel measurement resources and the codebook mode, wherein the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources comprises N resource pairs; and each of the N resource pairs comprises at least one channel measurement resource in the first group of channel measurement resources and at least one channel measurement resource in the second group of channel measurement resources, and N is a positive integer;
   the second sub-CSI is related to a fifth group of channel measurement resources and the codebook mode, wherein the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and
   the third sub-CSI is related to the third group of channel measurement resources and the codebook mode.

4. The method according to any one of claims 1 to 3, wherein the first configuration information and the second configuration information are carried in at least one of the following: radio resource control RRC signaling, downlink control information DCI, and medium access control MAC.

5. A communication method, wherein the method comprises:

sending first configuration information and second configuration information to a terminal device, wherein the first configuration information is used to configure a channel measurement resource set, the second configuration information is used to configure one codebook mode related to the channel measurement resource set, and the channel measurement resource set comprises a first group of channel measurement resources and a second group of channel measurement resources; and
receiving channel state information CSI from the terminal device, wherein the CSI is related to the first configuration information and the second configuration information.

6. A communication method, wherein the method comprises:

obtaining first configuration information, second configuration information, and third configuration information, wherein the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources; and
sending channel state information CSI to at least one network device, wherein the CSI is related to the first configuration information, the second configuration information, and the third configuration information.

7. The method according to claim 6, wherein a part of channel measurement resources in a channel measurement resource set is the first group of channel measurement resources, and the other part of the channel measurement resources in the channel measurement resource set is the second group of channel measurement resources.

8. The method according to claim 6 or 7, wherein the CSI comprises at least one of first sub-CSI and second sub-CSI, wherein the first sub-CSI is related to the first group of channel measurement resources and the first codebook mode, and the second sub-CSI is related to the second group of channel measurement resources and the second codebook mode.

9. A communication method, wherein the method comprises:

sending first configuration information, second configuration information, and third configuration information to a terminal device, wherein the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources; and
receiving channel state information CSI from the terminal device, wherein the CSI is related to the first configuration information, the second configuration information, and the third configuration information.

10. A communication method, wherein the method comprises:

obtaining first configuration information, second configuration information, third configuration information, and fourth configuration information, wherein the first configuration information is used to configure a first group of channel measurement resources and a second group of channel measurement resources;
the second configuration information is used to configure a first codebook mode related to a fourth group of channel measurement resources, wherein the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources comprises N resource pairs; and each of the N resource pairs comprises at least one channel measurement resource in the first group of channel measurement resources and at least one channel measurement resource in the second group of channel measurement resources;
the third configuration information is used to configure a second codebook mode related to a fifth group of channel measurement resources, wherein the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and

the fourth configuration information is used to configure a third codebook mode related to the third group of channel measurement resources; and

sending channel state information CSI to at least one network device, wherein the CSI is related to the first configuration information, the second configuration information, the third configuration information, and the fourth configuration information.

11. The method according to claim 10, wherein a part of channel measurement resources in a channel measurement resource set is the first group of channel measurement resources, and the other part of the channel measurement resources in the channel measurement resource set is the second group of channel measurement resources.

12. The method according to claim 10 or 11, wherein the CSI comprises at least one of first sub-CSI, second sub-CSI, and third sub-CSI, wherein the first sub-CSI is related to the fourth group of channel measurement resources and the first codebook mode, the second sub-CSI is related to the fifth group of channel measurement resources and the second codebook mode, and the third sub-CSI is related to the third group of channel measurement resources and the third codebook mode.

13. A communication method, wherein the method comprises:

sending first configuration information, second configuration information, third configuration information, and fourth configuration information to a terminal device, wherein the first configuration information is used to configure a first group of channel measurement resources and a second group of channel measurement resources;

the second configuration information is used to configure a first codebook mode related to a fourth group of channel measurement resources, wherein the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources comprises N resource pairs; and each of the N resource pairs comprises at least one channel measurement resource in the first group of channel measurement resources and at least one channel measurement resource in the second group of channel measurement resources;

the third configuration information is used to configure a second codebook mode related to a fifth group of channel measurement resources, wherein the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and

the fourth configuration information is used to configure a third codebook mode related to the third group of channel measurement resources; and

receiving channel state information CSI from the terminal device, wherein the CSI is related to the first configuration information, the second configuration information, the third configuration information, and the fourth configuration information.

14. A communication device, wherein the communication device comprises:

an obtaining unit, configured to obtain first configuration information and second configuration information, wherein the first configuration information is used to configure a channel measurement resource set, the second configuration information is used to configure one codebook mode related to the channel measurement resource set, and the channel measurement resource set comprises a first group of channel measurement resources and a second group of channel measurement resources; and

a sending unit, configured to send channel state information CSI to a network device, wherein the CSI is related to the first configuration information and the second configuration information.

15. The communication device according to claim 14, wherein a part of channel measurement resources in the channel measurement resource set is the first group of channel measurement resources, and the other part of the channel measurement resources in the channel measurement resource set is the second group of channel measurement resources.

16. The communication device according to claim 14 or 15, wherein the CSI comprises at least one of first sub-CSI, second sub-CSI, and third sub-CSI, wherein

the first sub-CSI is related to a fourth group of channel measurement resources and the codebook mode, wherein the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources comprises N resource pairs; and each of the N resource pairs comprises at least one channel measurement resource in the first group of channel measurement resources and at least one channel measurement resource in the second group of channel measurement resources, and N is a positive integer;
the second sub-CSI is related to a fifth group of channel measurement resources and the codebook mode, wherein the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and
the third sub-CSI is related to the third group of channel measurement resources and the codebook mode.

17. The communication device according to any one of claims 14 to 16, wherein the first configuration information and the second configuration information are carried in at least one of the following: radio resource control RRC signaling, downlink control information DCI, and medium access control MAC.

18. A communication device, wherein the communication device comprises:

a sending unit, configured to send first configuration information and second configuration information to a terminal device, wherein the first configuration information is used to configure a channel measurement resource set, the second configuration information is used to configure one codebook mode related to the channel measurement resource set, and the channel measurement resource set comprises a first group of channel measurement resources and a second group of channel measurement resources; and
a receiving unit, configured to receive channel state information CSI from the terminal device, wherein the CSI is related to the first configuration information and the second configuration information.

19. A communication device, wherein the communication device comprises:

an obtaining unit, configured to obtain first configuration information, second configuration information, and third configuration information, wherein the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources; and
a sending unit, configured to send channel state information CSI to at least one network device, wherein the CSI is related to the first configuration information, the second configuration information, and the third configuration information.

20. The communication device according to claim 19, wherein a part of channel measurement resources in a channel measurement resource set is the first group of channel measurement resources, and the other part of the channel measurement resources in the channel measurement resource set is the second group of channel measurement resources.

21. The communication device according to claim 19 or 20, wherein the CSI comprises at least one of first sub-CSI and second sub-CSI, wherein the first sub-CSI is related to the first group of channel measurement resources and the first codebook mode, and the second sub-CSI is related to the second group of channel measurement resources and the second codebook mode.

22. A communication device, wherein the communication device comprises:

a sending unit, configured to send first configuration information, second configuration information, and third configuration information to a terminal device, wherein the first configuration information is used to configure a first group of channel measurement resources and a second group of channel measurement resources, the second configuration information is used to configure a first codebook mode related to the first group of channel measurement resources, and the third configuration information is used to configure a second codebook mode related to the second group of channel measurement resources; and
a receiving unit, configured to receive channel state information CSI from the terminal device, wherein the CSI is related to the first configuration information, the second configuration information, and the third configuration information.

23. A communication device, wherein the communication device comprises:

an obtaining unit, configured to obtain first configuration information, second configuration information, third configuration information, and fourth configuration information, wherein the first configuration information is used to configure a first group of channel measurement resources and a second group of channel measurement resources;
the second configuration information is used to configure a first codebook mode related to a fourth group of channel measurement resources, wherein the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources comprises N resource pairs; and each of the N resource pairs comprises at least one channel measurement resource in the first group of channel measurement resources and at least one channel measurement resource in the second group of channel measurement resources;
the third configuration information is used to configure a second codebook mode related to a fifth group of channel measurement resources, wherein the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and
the fourth configuration information is used to configure a third codebook mode related to the third group of channel measurement resources; and
a sending unit, configured to send channel state information CSI to at least one network device, wherein the CSI is related to the first configuration information, the second configuration information, the third configuration information, and the fourth configuration information.

24. The communication device according to claim 23, wherein a part of channel measurement resources in a channel measurement resource set is the first group of channel measurement resources, and the other part of the channel measurement resources in the channel measurement resource set is the second group of channel measurement resources.

25. The communication device according to claim 23 or 24, wherein the CSI comprises at least one of first sub-CSI, second sub-CSI, and third sub-CSI, wherein the first sub-CSI is related to the fourth group of channel measurement resources and the first codebook mode, the second sub-CSI is related to the fifth group of channel measurement resources and the second codebook mode, and the third sub-CSI is related to the third group of channel measurement resources and the third codebook mode.

26. A communication device, wherein the communication device comprises:

a sending unit, configured to send first configuration information, second configuration information, third configuration information, and fourth configuration information to a terminal device, wherein the first configuration information is used to configure a first group of channel measurement resources and a second group of channel measurement resources;

the second configuration information is used to configure a first codebook mode related to a fourth group of channel measurement resources, wherein the fourth group of channel measurement resources is the first group of channel measurement resources, or the fourth group of channel measurement resources is a channel measurement resource other than a first same channel measurement resource in the first group of channel measurement resources; the first same channel measurement resource is a same channel measurement resource in the first group of channel measurement resources and in a third group of channel measurement resources; the third group of channel measurement resources comprises N resource pairs; and each of the N resource pairs comprises at least one channel measurement resource in the first group of channel measurement resources and at least one channel measurement resource in the second group of channel measurement resources;

the third configuration information is used to configure a second codebook mode related to a fifth group of channel measurement resources, wherein the fifth group of channel measurement resources is the second group of channel measurement resources, or the fifth group of channel measurement resources is a channel measurement resource other than a second same channel measurement resource in the second group of channel measurement resources; and the second same channel measurement resource is a same channel measurement resource in the second group of channel measurement resources and in the third group of channel measurement resources; and

the fourth configuration information is used to configure a third codebook mode related to the third group of channel measurement resources; and

a receiving unit, configured to receive channel state information CSI from the terminal device, wherein the CSI is related to the first configuration information, the second configuration information, the third configuration information, and the fourth configuration information.

27. A communication device, comprising a processor, wherein the processor is coupled to a memory, the memory is configured to store a program or instructions, and when the program or the instructions are executed by the processor, the communication device is enabled to perform the method according to any one of claims 1 to 4, 6 to 8, and 10 to 12.

28. A communication device, comprising a processor, wherein the processor is coupled to a memory, the memory is configured to store a program or instructions, and when the program or the instructions are executed by the processor, the communication device is enabled to perform the method according to any one of claims 5, 9, and 13.

29. A communication system, wherein the communication system comprises the communication device according to claim 27 and/or the communication device according to claim 28.

30. A computer-readable storage medium, wherein the medium stores instructions, and when the instructions are executed by a computer, the method according to any one of claims 1 to 13 is implemented.

31. A computer program product, comprising instructions, wherein when the instructions are run on a computer, the computer is enabled to perform the method according to any one of claims 1 to 13.

FIG. 1

FIG. 2

FIG. 3

Group 1 | CMR 1 | | CMR 3 | CMR 5 | CMR 6 | $K_1 = 4$

Group 2 | CMR 2 | | CMR 4 | $K_2 = 2$

Pair 1 | Pair 2

N=2

FIG. 4

Network device | Terminal device

501: First configuration information and second configuration information

502: CSI

FIG. 5

Obtain first configuration information, second configuration information, and third configuration information — 601

Send channel state information CSI to at least one network device — 602

FIG. 6

First network device

Terminal device

Second network device

701: Obtain first configuration information

702: Second configuration information

703: Second configuration information

704: First sub-CSI

705: Second sub-CSI

FIG. 7

Obtain first configuration information, second configuration information, third configuration information, and fourth configuration information — 801

Send channel state information CSI to at least one network device — 802

FIG. 8

Obtain indication information, first configuration information, and second configuration information — 901

Send channel state information CSI to at least one network device — 902

FIG. 9

```
┌─────────────────────────────────────────┐ ┌─ 1001
│        Obtain indication information      │ /
└─────────────────────────────────────────┘
                    │
                    ▼
┌─────────────────────────────────────────┐ ┌─ 1002
│  Send channel state information CSI to a  │ /
│             network device                │
└─────────────────────────────────────────┘
```

FIG. 10

```
┌ ─ ─ ─ ─ ─ ─ ─ ─ ─ ─ ─ ─ ─ ─ ─ ┐
       Communication device
│      ┌─1101          ┌─1102    │
       │               │
│   ┌────────┐     ┌────────┐    │
    │Obtaining│●───●│Sending │
│   │  unit  │     │  unit  │    │
    └────────┘     └────────┘
│                               │
└ ─ ─ ─ ─ ─ ─ ─ ─ ─ ─ ─ ─ ─ ─ ─ ┘
```

FIG. 11

```
┌ ─ ─ ─ ─ ─ ─ ─ ─ ─ ─ ─ ─ ─ ─ ─ ┐
       Communication device
│      ┌─ 1201         ┌─ 1202   │
       │               │
│   ┌────────┐     ┌─────────┐   │
    │Sending │●───●│Receiving│
│   │  unit  │     │  unit   │   │
    └────────┘     └─────────┘
│                               │
└ ─ ─ ─ ─ ─ ─ ─ ─ ─ ─ ─ ─ ─ ─ ─ ┘
```

FIG. 12

```
┌───────────────────────────────────────────────┐
│             Communication device                │
│                                                 │
│        1303                       1301          │
│   ┌──────────────┐          ┌──────────────┐    │
│   │Communication │          │  Processor   │    │
│   │    port      │          │              │    │
│   └──────────────┘          └──────────────┘    │
│          ▲                         ▲            │
│          ▼                         ▼            │
│   ━━━━━━━━━━━━━━━━━━━━━━━━━━━━━━━━━━━━━━━━━      │
│                    ▲                            │
│                    ▼       1302                 │
│            ┌──────────────┐                     │
│            │   Memory     │                     │
│            └──────────────┘                     │
│                                                 │
└───────────────────────────────────────────────┘
```

FIG. 13

1415

1413

Tx

Rx

Processor

1411

1412

Memory

Network
interface

1414

FIG. 14

## INTERNATIONAL SEARCH REPORT

| International application No. |
| --- |
| **PCT/CN2023/119731** |

| A. | CLASSIFICATION OF SUBJECT MATTER |
| --- | --- |

H04B 7/0456(2017.01)i

According to International Patent Classification (IPC) or to both national classification and IPC

| B. | FIELDS SEARCHED |
| --- | --- |

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI, 3GPP: 配置, 信道测量资源, 信道状态信息, 参考信号, 集合, 组, 码本模式, 关联, 相关, configuration, Channel Measurement Resource, CMR, Channel State Information, CSI, Reference Signal, RS, set, group, codebook, mode, associated, related

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | MEDIATEK INC. "R1-2112282 UE Features for further enhancements on NR MIMO" *3GPP TSG RAN WG1 Meeting #107-e,* 19 November 2021 (2021-11-19), section 2.7 | 1-31 |
| A | CN 111771340 A (SAMSUNG ELECTRONICS CO., LTD.) 13 October 2020 (2020-10-13) entire document | 1-31 |
| A | CN 112514297 A (LENOVO (BEIJING) CO., LTD.) 16 March 2021 (2021-03-16) entire document | 1-31 |
| A | WO 2021035385 A1 (LENOVO (BEIJING) LTD.) 04 March 2021 (2021-03-04) entire document | 1-31 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 December 2023** | **13 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/119731**

| Patent document cited in search report | | | Publication date (day/month/year) | Patent family member(s) | | | Publication date (day/month/year) |
|---|---|---|---|---|---|---|---|
| CN | 111771340 | A | 13 October 2020 | US | 2019253181 | A1 | 15 August 2019 |
| | | | | WO | 2019156512 | A1 | 15 August 2019 |
| | | | | EP | 3738223 | A1 | 18 November 2020 |
| CN | 112514297 | A | 16 March 2021 | WO | 2020010632 | A1 | 16 January 2020 |
| | | | | EP | 3821553 | A1 | 19 May 2021 |
| | | | | US | 2022021420 | A1 | 20 January 2022 |
| | | | | US | 2022352935 | A1 | 03 November 2022 |
| | | | | CN | 115378479 | A | 22 November 2022 |
| WO | 2021035385 | A1 | 04 March 2021 | | None | | |

Form PCT/ISA/210 (patent family annex) (July 2022)

**EP 4 597 857 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211214376